# EUROPEAN PATENT APPLICATION

(11) **EP 3 565 203 A1**
(43) Date of publication of application: **06.11.2019**
(21) Application number: 17886239.7
(22) Date of filing: 27.12.2017
(51) Int. Cl.: H04L 27/26, H04W 72/04

(54) **TERMINAL DEVICE, BASE STATION DEVICE, AND COMMUNICATION METHOD**

(30) Priority: 27.12.2016 JP 2016252805
(71) Applicant: Sharp Kabushiki Kaisha, Sakai City, Osaka 590-8522 (JP); FG INNOVATION COMPANY LIMITED, New Territories, HK (CN)
(72) Inventor: YOSHIMURA Tomoki, Osaka 590-8522 (JP); SUZUKI Shoichi, Osaka 590-8522 (JP); OUCHI Wataru, Osaka 590-8522 (JP); LIU Liqing, Osaka 590-8522 (JP); IMAMURA Kimihiko, Osaka 590-8522 (JP)
(74) Representative: Müller Hoffmann & Partner
(86) International application number: PCT/JP2017/046892
(87) International publication number: WO 2018/124178

(57) **Abstract**

A terminal apparatus includes: a receiver configured to receive higher layer signaling; and a decoding unit configured to attempt to decode a PDCCH in a control resource set, in which in a time domain, granularity of a physical characteristic of the PDCCH is considered to be X symbols, a value of the X is given by the higher layer signaling, and the higher layer signaling includes information for indicating the number of OFDM symbols of the control resource set.

## Description

### Technical Field

The present invention relates to a terminal apparatus, a base station apparatus, and a communication method.

This application claims priority based on JP 2016-252805 filed on December 27, 2016, the contents of which are incorporated herein by reference.

### Background Art

A radio access method and a radio network for cellular mobile communications (hereinafter, referred to as "Long Term Evolution (LTE)", or "Evolved Universal Terrestrial Radio Access (EUTRA)") have been studied in the 3rd Generation Partnership Project (3GPP). In LTE, a base station apparatus is also referred to as an evolved NodeB (eNodeB), and a terminal apparatus is also referred to as a User Equipment (UE). LTE is a cellular communication system in which multiple areas are deployed in a cellular structure, with each of the multiple areas being covered by a base station apparatus. A single base station apparatus may manage a plurality of cells.

Technical studies of a next-generation standard (New Radio (NR)) have been conducted by 3GPP to make a proposal to International Mobile Telecommunication (IMT) - 2020 which International Telecommunication Union (ITU) develops as a standard for a next-generation mobile communication system (NPL 1). The NR is required, in a single technology framework, to meet a requirement assuming three scenarios of enhanced Mobile BroadBand (eMBB), massive Machine Type Communication (mMTC), and Ultra Reliable and Low Latency Communication (URLLC).

### Citation List

### Non Patent Literature

NPL 1: "New SID proposal: Study on New Radio Access Technology", RP-160671, NTT docomo, 3GPP TSG RAN Meeting #71, Goteborg, Sweden, 7th - 10th March, 2016.

### Summary of Invention

### Technical Problem

An aspect of the present invention provides a terminal apparatus capable of efficiently performing downlink reception, a communication method used for the terminal apparatus, a base station apparatus capable of efficiently performing downlink transmission, and a communication method used for the base station apparatus.

### Solution to Problem

(1) A first aspect of the present invention is a terminal apparatus, the terminal apparatus including: a receiver configured to receive higher layer signaling; and a decoding unit configured to attempt to decode a PDCCH in a control resource set, in which in a time domain, granularity of a physical characteristic of the PDCCH is considered to be X symbols, a value of the X is given by the higher layer signaling, and the higher layer signaling includes information indicating the number of OFDM symbols of the control resource set.
(2) A second aspect of the present invention is a terminal apparatus, in which whether the PDCCH is distributedly mapped or continuously mapped may be configured for each of the control resource sets.
(3) A third aspect of the present invention is a base station apparatus, the base station apparatus including: a transmitter configured to transmit a PDCCH in a control resource set, in which granularity of a physical characteristic of the PDCCH is X symbols, a value of the X is included in higher layer signaling, and the higher layer signaling includes information for indicating the number of OFDM symbols of the control resource set.
(4) A fourth aspect of the present invention is a base station apparatus, in which whether the PDCCH is distributedly mapped or continuously mapped may be configured for each of the control resource sets.
(5) A fifth aspect of the present invention is a communication method of a terminal apparatus, the communication method including the steps of: receiving higher layer signaling; and attempting to decode a PDCCH in a control resource set, in which in a time domain, granularity of a physical characteristic of the PDCCH is considered to be X symbols, a value of the X is given by the higher layer signaling, and the higher layer signaling includes information for indicating the number of OFDM symbols of the control resource set.
(6) A seventh aspect of the present invention is a communication method of a base station apparatus, the communication method including: a transmitter configured to transmit a PDCCH in a control resource set, in which granularity of a physical characteristic of the PDCCH is X symbols, a value of the X is included in higher layer signaling, and the higher layer signaling includes information for indicating the number of OFDM symbols of the control resource set.

### Advantageous Effects of Invention

According to an aspect of the present invention, the terminal apparatus can efficiently perform downlink reception. In addition, the base station apparatus can efficiently perform downlink transmission.

### Brief Description of Drawings

FIG. 1 is a conceptual diagram of a radio communication system according to an aspect of the present embodiment.
FIG. 2 is an example illustrating a configuration of a radio frame, a subframe, and a slot according to an aspect of the present embodiment.
FIG. 3 is a diagram illustrating a configuration example of the slot and a mini-slot according to an aspect of the present embodiment.
FIG. 4 is a diagram illustrating an example of a first initial connection procedure (4-step contention based RACH procedure) according to an aspect of the present embodiment.
FIG. 5 is a diagram illustrating an example of a second initial connection procedure (2-step contention based RACH procedure) according to an aspect of the present embodiment.
FIG. 6 is a diagram illustrating an example of a resource element included in the slot according to an aspect of the present embodiment.
FIG. 7 is a diagram illustrating an example of mapping of a control resource set according to an aspect of the present embodiment.
FIG. 8 is a schematic block diagram illustrating a configuration of a coding unit 1071 according to an aspect of the present invention.
FIG. 9 is a diagram illustrating an example of a configuration of an REG according to an aspect of the present embodiment.
FIG. 10 is a diagram illustrating an example of a corresponding relationship between a reference signal and a control channel according to an aspect of the present embodiment.
FIG. 11 is a diagram illustrating an example of a corresponding relationship between the reference signal and the control channel in a case that the control channel is locally mapped, according to an aspect of the present embodiment.
FIG. 12 is a diagram illustrating an example of a corresponding relationship between the reference signal and the control channel in a case that the control channel is distributedly mapped, according to an aspect of the present embodiment.
FIG. 13 is a diagram illustrating an example of a corresponding relationship between the control channel and the reference signal in a case that CCEs included in one control channel are locally mapped, according to an aspect of the present embodiment.
FIG. 14 is a diagram illustrating an example of a corresponding relationship between the control channel and the reference signal in a case that the CCEs included in one control channel are distributedly mapped, according to an aspect of the present embodiment.
FIGS. 15A to 15D are diagrams, each illustrating an example of a predetermined range including a first reference signal according to an aspect of the present embodiment.
FIG. 16 is a schematic block diagram illustrating a configuration example of a terminal apparatus 1 according to an aspect of the present embodiment.
FIG. 17 is a schematic block diagram illustrating a configuration example of a base station apparatus 3 according to an aspect of the present embodiment.

### Description of Embodiments

An embodiment of the present invention will be described below.

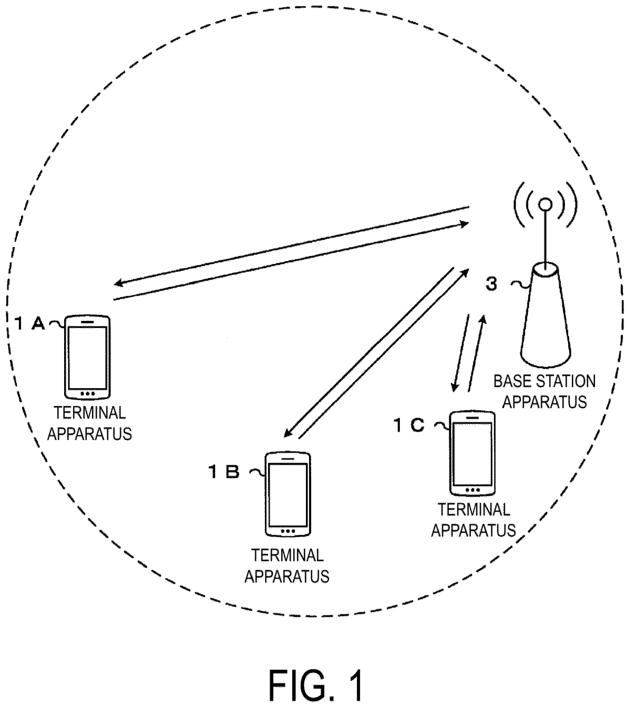

FIG. 1 is a conceptual diagram of a radio communication system according to an aspect of the present embodiment. In FIG. 1, the radio communication system includes terminal apparatuses 1A to 1C and a base station apparatus 3. Hereinafter, each of the terminal apparatuses 1A to 1C is also referred to as a terminal apparatus 1.

Hereinafter, various radio parameters relating to communication between the terminal apparatus 1 and the base station apparatus 3 will be described. Here, at least some of the radio parameters (e.g., Subcarrier Spacing (SCS)) are also referred to as Numerology. The radio parameters include at least some of the subcarrier spacing, a length of an OFDM symbol, a length of a subframe, a length of a slot, and a length of a mini-slot.

The subcarrier spacing may be classified into two kinds of a reference subcarrier spacing (Reference SCS, Reference Numerology) and a subcarrier spacing for a communication method used for actual radio communication (Actual SCS, Actual Numerology). The reference subcarrier spacing may be used to determine at least some of the radio parameters. For example, the reference subcarrier spacing is used to configure the length of the subframe. A method for determining the length of the subframe based on the reference subcarrier spacing will be described later. Here, the reference subcarrier spacing is 15 kHz, for example.

The subcarrier spacing used for the actual radio communication is one of the radio parameters for the communication method used in a case that there is no communication between the terminal apparatus 1 and the base station apparatus 3 (e.g. Orthogonal Frequency Division Multiplex (OFDM), Orthogonal Frequency Division Multiple Access (OFDMA), Single Carrier - Frequency Division Multiple Access (SC-FDMA), Discrete Fourier Transform - spread - OFDM (DFT-s-OFDM)). Hereinafter, the reference subcarrier spacing is also referred to as a first subcarrier spacing. Additionally, the subcarrier spacing used for the actual radio communication is also referred to as a second subcarrier spacing.

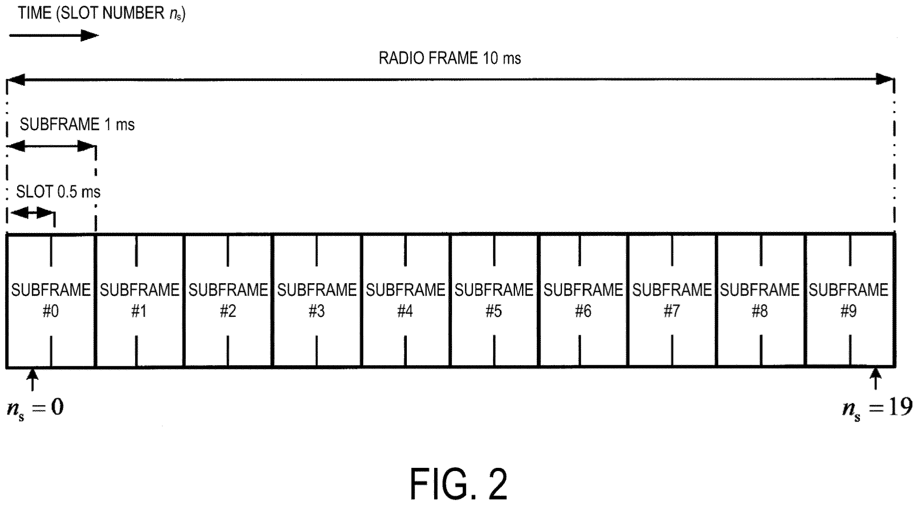

FIG. 2 is an example illustrating a configuration of a radio frame, a subframe, and a slot according to an aspect of the present embodiment. In the example illustrated in FIG. 2, the length of the slot is 0.5 ms, the length of the subframe is 1 ms, and the length of the radio frame is 10 ms. The slot may be a unit of resource allocation in a time domain. For example, the slot may be a unit by which one transport block is mapped. For example, the transport block may be mapped to one slot. Here, the transport block may be a unit of data transmitted within a predetermined interval (e.g., Transmission Time Interval (TTI)) defined by a higher layer (e.g., Mediam Access Control (MAC). The transport block may be a data block, transport data, transmission data, a transmission code, a transmission block, a payload, information, an information block, coded data, downlink data, and uplink data.

For example, the length of the slot may be given by the number of OFDM symbols. For example, the number of OFDM symbols may be 7 or 14. The length of the slot may be given at least based on the length of the OFDM symbol. The length of the OFDM symbol may vary at least based on the second subcarrier spacing. Furthermore, the length of the OFDM symbol may be given at least based on the number of points in Fast Fourier Transform (FFT) used to generate the OFDM symbol. Furthermore, the length of the OFDM symbol may include a length of a Cyclic Prefix (CP) added to the OFDM symbol. Here, the OFDM symbol may also be referred to as a symbol. Additionally, in a case that a communication method other than the OFDM is used in communication between the terminal apparatus 1 and the base station apparatus 3 (for example, a case that the SC-FDMA or the DFT-s-OFDM is used, or the like), an SC-FDMA symbol and/or a DFT-s-OFDM symbol to be generated is also referred to as the OFDM symbol. Here, for example, the length of the slot may be 0.25 ms, 0.5 ms, 1 ms, 2 ms, or 3 ms.

Here, the OFDM includes a multi-carrier communication method to which a Pulse Shape, PAPR reduction, out-of-band radiation reduction, or filtering, and/or phase processing (e.g., phase rotation, etc.) is applied. Here, the multi-carrier communication method is, for example, the OFDM. Furthermore, the multi-carrier communication method may be a communication method for generating/transmitting a signal in which a plurality of subcarriers is multiplexed.

The length of the subframe may be 1 ms. Furthermore, the length of the subframe may be given based on the first subcarrier spacing. For example, in a case that the first subcarrier spacing is 15 kHz, the length of the subframe may be 1 ms. The subframe may include 1 or a plurality of slots.

The radio frame may be given by the number of subframes. The number of subframes for the radio frame may be, for example, 10.

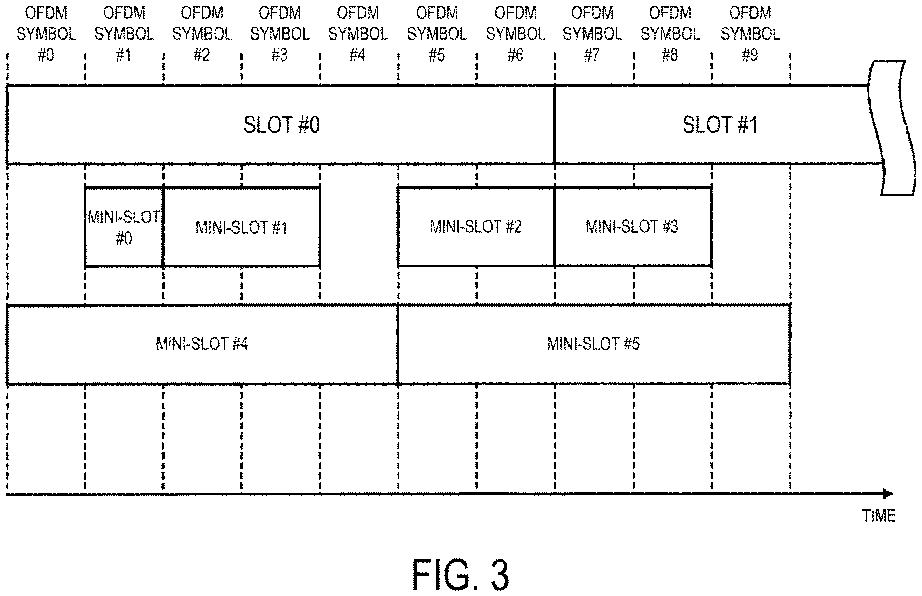

FIG. 3 is a diagram illustrating a configuration example of the slot and a mini-slot according to an aspect of the present embodiment. In FIG. 3, seven OFDM symbols configure one slot. The mini-slot may include the smaller number of OFDM symbols than the number of OFDM symbols configuring the slot. Furthermore, the mini-slot may also be shorter in length than the slot. FIG. 3 illustrates a mini-slot #0 to a mini-slot #5 as an example of a mini-slot configuration. The mini-slot may be configured with one OFDM symbol, as illustrated by the mini-slot #0. Additionally, the mini-slot may also be configured with two OFDM symbols as illustrated by the mini-slots #1 through #3. Additionally, a gap may also be inserted between the two mini-slots, as illustrated by the mini-slot #1 and the mini-slot #2. Additionally, the mini-slot may also be configured across a boundary between a slot #0 and a slot #1, as illustrated by the mini-slot #5. That is, the mini-slot may be configured across the boundary of the slots. Here, the mini-slot is also referred to as a subslot. Additionally, the mini-slot is also referred to as a short Transmission Time Interval (short TTI (sTTI)). Additionally, in the following, the slot may be replaced by the mini-slot. The mini-slot may be configured by the same number of OFDM symbols as the slot. The mini-slot may include the larger number of OFDM symbols than the number of OFDM symbols configuring the slot. The length of the mini-slot in the time domain may be shorter than the slot. The length of the mini-slot in the time domain may be shorter than the sub frame.

An example of an initial connection procedure according to the present embodiment will be described below.

The base station apparatus 3 includes a communicable range (or a communication area) controlled by the base station apparatus 3. It is possible to divide the communicable range into one or a plurality of cells (or serving cells, subcells, beams, etc.) and to manage communication with the terminal apparatus 1 for each cell. On the other hand, the terminal apparatus 1 selects at least one cell from among a plurality of cells, and attempts to establish a connection with the base station apparatus 3. Here, a first state in which a connection between the terminal apparatus 1 and at least one cell of the base station apparatus 3 is established is also referred to as an RRC Connection. Here, RRC is Radio Resource Control. Additionally, a second state in which the terminal apparatus 1 does not establish a connection with any of the cells of the base station apparatus 3 is also referred to as RRC idle. In addition, a third state in which a connection between the terminal apparatus 1 and at least one cell of the base station apparatus 3 is established, but some functions are limited between the terminal apparatus 1 and the base station apparatus 3 is also referred to as RRC suspended. The RRC suspended is also referred to as an RRC inactive.

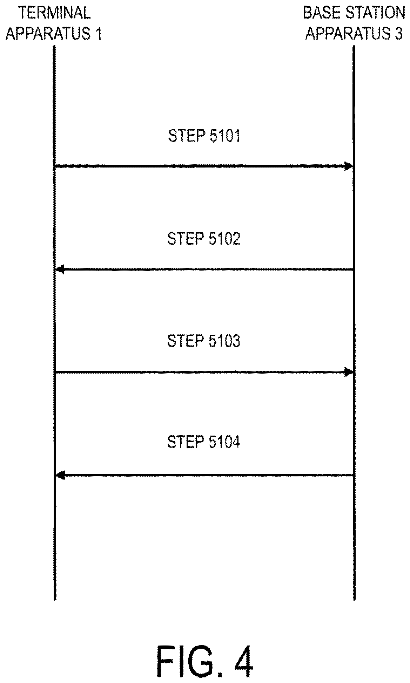

The terminal apparatus 1 in the RRC idle may attempt to establish a connection with at least one cell (e.g., target cell) of the base station apparatus 3. FIG. 4 is a diagram illustrating an example of a first initial connection procedure (4-step contention based RACH procedure) according to an aspect of the present embodiment. The first initial connection procedure is configured to include at least some of steps 5101 to 5104.

Step 5101 is a step in which the terminal apparatus 1 makes a request to the target cell, via a physical channel, for a response for an initial connection. Alternatively, step 5101 is a step in which the terminal apparatus 1 performs a first transmission to the target cell via the physical channel. Here, the physical channel may be, for example, a Physical Random Access CHannel (PRACH). The physical channel may be a channel dedicatedly used for requesting a response for the initial connection. Furthermore, the physical channel is also referred to as a random access channel. Here, an operation in which information is transmitted via the physical channel (or channel) is also referred to as the physical channel (or channel) being transmitted.

Before performing step 5101, the terminal apparatus 1 acquires information associated with a transmission method of the random access channel. For example, the information associated with the transmission method of the random access channel may be synchronization with the target cell, a transmission timing of the random access channel, a configuration of the random access channel, a configuration of a bit sequence transmitted via the random access channel, or the like. For example, the terminal apparatus 1 may receive a Syncronization Signal (SS) transmitted by the base station apparatus 3 in order to synchronize with the downlink of the target cell. The synchronization includes at least one of synchronization of the time domain and synchronization of a frequency domain.

The synchronization signal may include a Primary Synchronization Signal (PSS) and/or a Secondary Synchronization Signal (SSS).

The synchronization signal may be transmitted including an ID (cell ID) of the target cell. Alternatively, the synchronization signal may be transmitted including a sequence generated at least based on the cell ID. Additionally, the synchronization signal may be transmitted while the beam (or a precoder) being applied thereto. Here, the synchronization signal may be transmitted including an index of the beam (beam index) applied to the synchronization signal. Additionally, the synchronization signal may also be transmitted including a sequence generated at least based on the index of the beam applied to the synchronization signal. Here, the index of the beam may be merely an index, the index may not be associated with the beam. For example, the index may be associated with an index of a time and/or a frequency at which the synchronization signal is transmitted. For example, the index may be an index of the OFDM symbol in which the synchronization signal is transmitted. Additionally, the index may be an index of a slot in which the synchronization signal is transmitted. Additionally, the index may be an index of a subframe in which the synchronization signal is transmitted. Additionally, the index may be an index for the synchronization signal. For example, the synchronization signal may be transmitted at a plurality of times within a predetermined period (e.g., the slot, the subframe, etc.). The index may be used to identify the synchronization signals transmitted in the predetermined period. The index may be an index for the synchronization signal transmitted in the predetermined period.

The beam exhibits a phenomenon in which antenna gain varies depending on a direction. The beam may be given at least based on directivity of the antenna. Additionally, the beam may also be given at least based on the phase transformation of the carrier signal. Additionally, the beam may also be given by the application of a precoder. The precoder will be described later.

The terminal apparatus 1 may receive a broadcast channel (for example, Physical Broadcast CHannel (PBCH)) transmitted from the target cell. The broadcast channel may be transmitted including an essential information block, such as a Master Information Block (MIB) and an Essential Information Block (EIB), which includes essential system information needed by the terminal apparatus 1. Here, the essential information block may be part of the system information. The essential information block may include a number of the radio frame. Additionally, the essential information block may include information about a position within a superframe including a plurality of radio frames (for example, information for indicating at least some of System Frame Numbers (SFNs) in the superframe). Additionally, the broadcast channel may include the beam index. The broadcast channel may include at least some of the information associated with the transmission method of the random access channel.

The MIB is mapped to a Broadcast Control CHannel (BCCH) in a higher layer channel (logical channel). The MIB is mapped to the broadcast channel in a channel of the physical layer (Phisical channel).

Here, the higher layer channel is defined by a type of information to be transmitted. For example, the BCCH is the higher layer channel that is used to transmit Broadcasting system control information. Here, the broadcasting system control information is, for example, the MIB. Additionally, a Common Control CHannel (CCCH) is the higher layer channel used to transmit common information among the plurality of terminal apparatuses 1. Here, the CCCH is used for the terminal apparatus 1 that is not in the RRC connection, for example. Additionally, a Dedicated Control CHannel (DCCH) is the higher layer channel used to transmit dedicated control information to the terminal apparatus 1. Here, the DCCH is used for the terminal apparatus 1 in the RRC connection, for example.

Here, the channel of the physical layer includes at least some or all of the broadcast channel, the random access channel, the control channel, and a shared channel.

The terminal apparatus 1 may receive at least part of the system information based on at least the information included in the broadcast channel. As for the system information, at least a portion of the system information may be included in a shared channel indicated by a downlink grant included in the control channel for the first initial connection.

The system information may include at least information for the terminal apparatus 1 to access the cell. The system information may include at least radio resource configuration information that is common to the plurality of terminal apparatuses 1. Here, the radio resource configuration information may be information related to the configuration of the radio resource for the downlink. Additionally, the radio resource configuration information may be radio resource configuration information for the uplink. Here, the radio resource configuration information for the uplink may include at least a portion of information associated with the transmission method of the random access channel. Additionally, the radio resource configuration information for the uplink may include information for the resource configuration of the random access channel. Additionally, the system information may also include at least resource allocation information of at least some system information.

The resource allocation of the system information may be configured for each block (System Information Block (SIB)) that includes at least a portion of the system information. By the base station apparatus 3, the SIB may be broadcast in one cell or may be transmitted dedicatedly to the terminal apparatus 1.

A System Information Block Type 1 (SIB1) includes at least information for the terminal apparatus 1 to access the cell (plmnIdentityList, for example). The SIB1 is transmitted on the shared channel indicated by the downlink grant included in the control channel for the first initial connection.

On the other hand, the SIB1 is mapped to the BCCH. The SIB1 is information broadcast in one cell.

A System Information Block Type 2 (SIB2) includes at least the parameter of the physical layer. Here, the parameter of the physical layer is, for example, information associated with the transmission method of the random access channel. The SIB2 is transmitted on the shared channel indicated by the downlink grant included in the control channel for the initial connection.

On the other hand, the SIB2 is mapped to the BCCH. The SIB2 is information broadcast in one cell.

Step 5102 may include an operation of the terminal apparatus 1 monitoring a predetermined physical channel for at least a predetermined period. For example, the predetermined physical channel may be a Control Channel. The control channel may be, for example, a Physical Downlink Control CHannel (PDCCH). The control channel may be transmitted, for example, including at least a portion of the Downlink Control Information (DCI). Here, the downlink control information may include resource allocation information of the downlink. The resource allocation information of the downlink is also referred to as a Downlink Grant (DL Grant). Additionally, the downlink control information may include resource allocation information of the uplink. The resource allocation information of the uplink is also referred to as an Uplink Grant (UL Grant). Additionally, the downlink control information may include information to be used for a group of terminal apparatuses including the terminal apparatus 1. Additionally, the downlink control information may include information broadcast at a predetermined cell. The downlink control information may include at least information indicating a region (Control resource set, Control Channel Region (Control Region)) to which the control channel may be mapped. Here, the information indicating the region to which the control channel may be mapped may be the number of OFDM symbols included in the region to which the control channel may be mapped. That is, the information indicating the region to which the control channel may be mapped may include information about the time domain. The control resource set is also referred to as a channel set. A configuration of the control channel and details of the control channel will be described later. The terminal apparatus 1 can monitor the control channel by being provided with the information indicating the region to which the control channel may be mapped.

Here, the information indicating the region to which the control channel may be mapped may be mapped to the BCCH. Furthermore, the information indicating the region to which the control channel may be mapped may be mapped to the CCCH. Furthermore, the information indicating the region to which the control channel may be mapped may be mapped to the DCCH.

For example, in step 5102, a control channel including predetermined downlink control information may be received. The predetermined downlink control information may include, for example, the uplink grant. Additionally, the predetermined downlink control information may include the downlink grant. The downlink grant may be resource allocation information of the shared channel (or data channel). Here, the shared channel is also referred to as a Physical Shared CHannel (PSCH). Here, the shared channel may include at least one of a Physical Downlink Shared Channel and a Physical Uplink Shared Channel. The physical downlink shared channel may be a downlink shared channel. The physical uplink shared channel may be an uplink shared channel.

In a case that the control channel including the downlink grant is received in step 5102, the shared channel indicated by the downlink grant may include the uplink grant. The uplink grant is also referred to as a random access response grant. The uplink grant may be resource allocation information for the shared channel including a first message transmitted by the terminal apparatus 1 in step 5103. On the other hand, the uplink grant may include resource allocation information of the physical uplink shared channel.

Here, the control channel monitored in step 5102 by the terminal apparatus 1 is also referred to as a control channel for the first initial connection. The control channel for the first initial connection may include a CRC sequence masked by a sequence (e.g., Radio Network Temporary Identifier (RNTI), Random Access-RNTI (RA-RNTI)) used for the first initial connection. That is, the terminal apparatus 1 may use the RA-RNTI in the monitor of the control channel for the first initial connection.

The control channel for the first initial connection procedure may be a control channel common to the terminal apparatuses 1 in the cell. Alternatively, the control channel for the first initial connection procedure may be a control channel common to the group of the terminal apparatuses 1. For example, information, which is mapped to the BCCH or the CCCH, indicating the region to which the control channel may be mapped may indicate a region to which the control channel common to the terminal apparatuses in the cell and/or the group of the terminal apparatuses 1 may be mapped. Furthermore, at least some of the control channels other than the control channel for the first initial connection procedure may be a control channel specific to the terminal apparatus 1. For example, information, which is mapped to the DCCH, indicating the region to which the control channel may be mapped may indicate a region to which at least some of the control channels other than the control channel for the first initial connection procedure may be mapped.

Step 5103 may include an operation of transmitting a physical uplink shared channel including the first message to be used for the terminal apparatus 1 to make a request to a target cell for a connection. The first message may be used for the terminal apparatus 1 to make the request to the target cell for the connection in the first initial connection procedure.

Step 5104 may include an operation of monitoring (or expecting to receive) a second message that is a response to the first message. The second message may be a message indicating that the first message has been properly received by the base station apparatus 3. The second message may be a message indicating that no Contention has occurred with other terminal apparatuses in the first initial connection procedure. The second message may be transmitted for a Contention resolution. The second message is also referred to as a contention resolution message. The second message may include a terminal apparatus-specific ID. The ID may be a System Architecture Evolution (SAE) -Temporary Mobile Subscriber Identity (S-TMSI), for example.

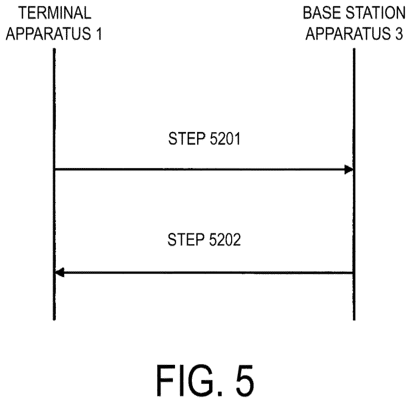

FIG. 5 is a diagram illustrating an example of a second initial connection procedure (2-step contention based RACH procedure) according to an aspect of the present embodiment. The second initial connection procedure may be configured to include at least some of steps 5201 and 5202.

Step 5201 includes a step of transmitting the random access channel and/or the uplink shared channel. The terminal apparatus 1 may transmit the random access channel including information indicating the resource of the uplink shared channel and the uplink shared channel. The uplink shared channel may include the first message. Here, in step 5201, the control channel may be transmitted by the terminal apparatus 1 instead of the random access channel. The control channel may be an uplink control channel (Physical Uplink Control CHannel (PUCCH)). The terminal apparatus 1 may transmit the uplink control channel including information indicating the resource of the uplink shared channel and the uplink shared channel.

The uplink control channel may include information indicating whether or not decoding of the transport block has been successfully completed (Acknowledgement (ACK), Hybrid Automatic Request-ACK (HARQ-ACK)). Additionally, the uplink control channel may be transmitted including Channel State Information (CSI) estimated based on the reference signal and the synchronization signal. Furthermore, the uplink control channel may include Scheduling Request (SR).

A downlink control channel may include information associated with a Start symbol indicating a start of the downlink shared channel. Information associated with the start symbol may be used for the downlink shared channel allocated based on the downlink control channel.

The start symbol may be given based on at least the downlink control channel. For example, the start symbol may be given based on an index for the OFDM symbol to which the downlink control channel is mapped. For example, in a case that the index for the OFDM symbol to which the downlink control channel is mapped is Xₛₜₐᵣₜ, the start symbol may be Xₛₜₐᵣₜ + 2, may be Xₛₜₐᵣₜ + 1, or may be Xₛₜₐᵣₜ. Furthermore, in a case that the downlink control channel is mapped to a plurality of OFDM symbols, Xₛₜₐᵣₜ may be an index for the leading OFDM symbol to which the downlink control channel is mapped, or may be an index for the last OFDM symbol to which the downlink control channel is mapped.

Step 5202 includes an operation of monitoring a predetermined downlink control channel. The control channel is also referred to as a control channel for the second initial connection. The control channel for the second initial connection may include a random access response grant. Additionally, the control channel for the second initial connection may also be used to resolve the contention. Additionally, the control channel for the second initial connection may also include the second message. Additionally, the control channel for the second initial connection may include a terminal apparatus-specific ID.

The first initial connection procedure may be used in a case that the terminal apparatus 1 is in the RRC idle. The second initial connection procedure may be used in the case that the terminal apparatus 1 is in the RRC idle. The first initial connection procedure may be used in a case that the terminal apparatus 1 is in the RRC suspended. The second initial connection procedure may be used in the case that the terminal apparatus 1 is in the RRC suspended. In addition, the first initial connection procedure may be used at least in the case that the terminal apparatus 1 is in the RRC idle, and the second initial connection procedure may be used in the case that the terminal apparatus 1 is in the RRC suspended.

A unit of the physical resource according to the present embodiment will be described below.

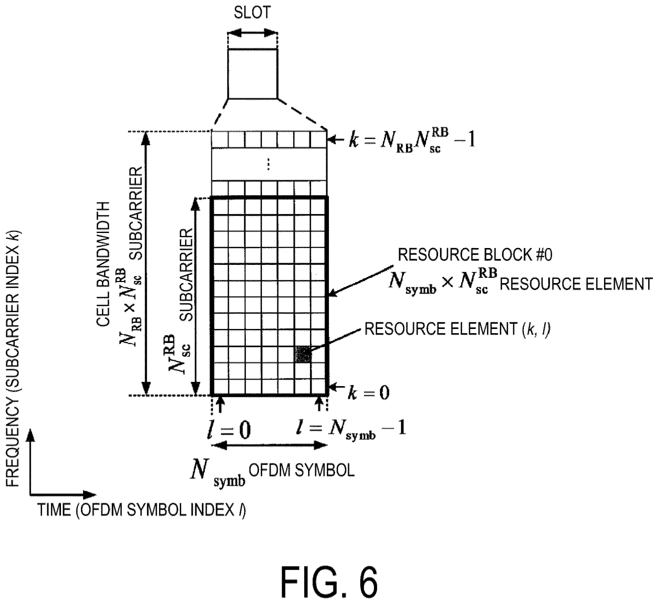

FIG. 6 is a diagram illustrating an example of a resource element included in the slot according to an aspect of the present embodiment. Here, the Resource Element (RE) is a unit defined by one OFDM symbol and one subcarrier. As illustrated in FIG. 6, the slot includes N_{symb} OFDM symbols. Additionally, the number of subcarriers may be given by the product of the number N_{RB} of resource blocks and the number N^{RB}_{SC} of subcarriers per one resource block. Here, the resource block indicates a group of resource elements in the time/frequency domain. The resource block may be used as a unit of resource allocation for the time domain and/or the frequency domain. For example, N^{RB}_{SC} may be 12. N_{symb} may be the same as the number of OFDM symbols included in the subframe. N_{symb} may be the same as the number of OFDM symbols included in the slot. N_{RB} may be given based on a bandwidth of the cell and the first subcarrier spacing. Additionally, N_{RB} may be given based on the bandwidth of the cell and the second subcarrier spacing. Additionally, N_{RB} may be given based on higher layer signaling (e.g., RRC signaling) or the like transmitted from the base station apparatus 3. Additionally, the N_{RB} may be given based on descriptions of a specification or the like. The resource element is identified by an index k for the subcarrier and an index 1 for the OFDM symbol.

Here, the RRC signaling includes at least common RRC signaling and dedicated RRC signaling. The common RRC signaling is signaling for transmitting information mapped to the CCCH. Additionally, the dedicated RRC signaling is signaling for transmitting information mapped to the DCCH.

Mapping of the control channel according to the present embodiment will be described below.

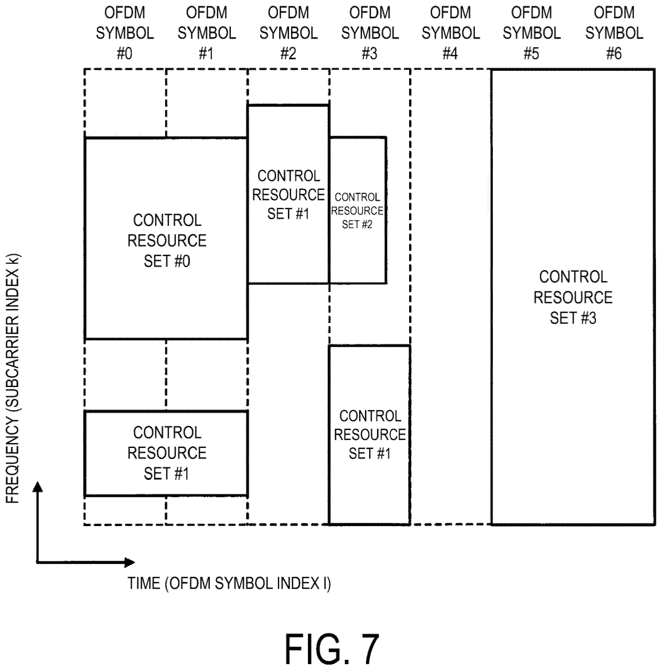

FIG. 7 is a diagram illustrating an example of mapping of the control resource set according to an aspect of the present embodiment. In FIG. 7, an example is illustrated in which the control resource sets are mapped to part of one slot. Furthermore, the slot illustrated in FIG. 7 includes seven OFDM symbols (OFDM symbol #0 to OFDM symbol #6). Here, the control resource set may indicate the time frequency domain used to map one or a plurality of control channels. For example, as illustrated in the control resource set #0 in FIG. 7, the control resource set may be a region given by a predetermined frequency resource and a predetermined number of OFDM symbols. Furthermore, the control resource set may also be mapped at the head of the slot. Furthermore, as illustrated in the control resource set #1 in FIG. 7, the control resource set may be mapped discontinuously in the time and/or frequency domain. Here, as illustrated in the control resource set #1, "being discontinuously mapped in the time and/or frequency domain" is also referred to as "Distributed Mapping". On the other hand, as illustrated in the control resource set #0, "being continuously mapped in the time and/or frequency domain" is also referred to as "Localized Mapping".

In addition, as illustrated in the control resource set #2 in FIG. 7, the control resource set may use only part of the length (in the time domain) of one OFDM symbol. Here, the part of the time domain in one OFDM symbol is also referred to as a subsymbol. For example, the subsymbol may be given based on a third subcarrier spacing greater than the second subcarrier spacing for the OFDM symbol #3. Additionally, the third subcarrier spacing may also be given based on a product of the second subcarrier spacing and a power of two.

Additionally, as illustrated in the control resource set #3 in FIG. 7, the control resource set may be configured to include all frequencies in one cell of a predetermined OFDM symbol.

In the frequency domain, the unit of mapping of the control resource set may be a resource block.

The control resource set may be a set of control channels (or control channel candidates) to be monitored by the terminal apparatus 1. The control resource set may include the set of control channels (or control channel candidates) to be monitored by the terminal apparatus 1.

Here, the control resource set including the control channel for the first initial connection is also referred to as a first control resource set. The first control resource set may be a control resource set common to the terminal apparatuses in the cell. A set of control channels (or control channel candidates) included in the first control resource set and monitored by the terminal apparatus 1 is also referred to as a Common Search Space (CSS).

Information indicating a region of the first control resource set may be mapped to the BCCH. The information indicating the region of the first control resource set may be given at least based on information broadcast by the MIB and/or the SIB. The information indicating the region of the first control resource set may be information used for configuring the number of OFDM symbols included in the first control resource set. The number of OFDM symbols included in the first control resource set may be commonly configured in one cell or a plurality of cells. The number of OFDM symbols included in the first control resource set may be given at least based on information broadcast by the MIB and/or the SIB.

Information indicating a region of the CSS may be mapped to the BCCH. For example, the information indicating the region of the CSS may be information used for configuring the number of OFDM symbols constituting the CSS. The number of OFDM symbols constituting the CSS may be commonly configured in one cell or a plurality of cells. The number of OFDM symbols constituting the CSS may be given at least based on information broadcast by the MIB and/or the SIB.

Additionally, the control resource set including the control channel for the second initial connection is also referred to as a second control resource set. The second control resource set may be a control resource set common to the terminal apparatuses in the cell. A set of control channels (or control channel candidates) included in the second control resource set and monitored by the terminal apparatus 1 is also referred to as the CSS.

Additionally, the control resource set, which is specifically configured for the terminal apparatus 1, is also referred to as a third control resource set. The third control resource set may not include the first control resource set. The third control resource set may not include the second control resource set. The third control resource set may include the first control resource set. The third control resource set may include the second control resource set. A set of control channels (or control channel candidates) included in the third control resource set and monitored by the terminal apparatus 1 is also referred to as a UE specific-Search Space (USS).

Information indicating a region of the third control resource set may be mapped to the DCCH. The information indicating the region of the third control resource set may be given at least based on the dedicated RRC signaling. For example, the information indicating the region of the third control resource set may be information used for configuring the number of OFDM symbols included in the third control resource set. The number of OFDM symbols included in the third control resource set may be at least given based on the dedicated RRC signaling.

Information indicating a region of the USS may be mapped to the DCCH. The information indicating the region of the USS may be given at least based on the dedicated RRC signaling. For example, the information indicating the region of the USS may be given at least based on the dedicated RRC signaling.

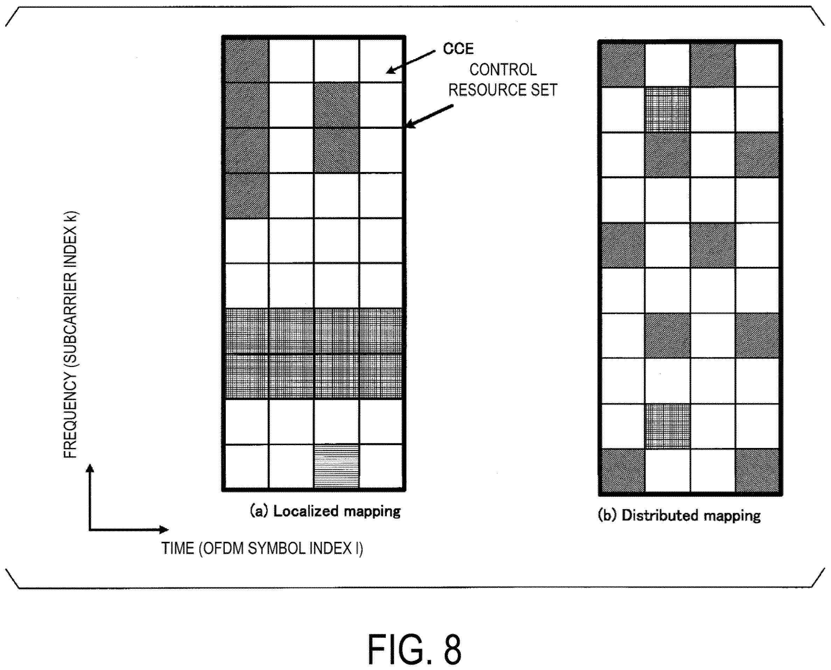

FIG. 8 is a diagram illustrating examples of mapping of the control channel according to an aspect of the present embodiment. In FIG. 8, one control resource set is assumed to be subjected to the localized mapping, but mapping of the control channel is performed in the same manner even in a case that one control resource set is subjected to the distributed mapping. The control channel may be mapped to one or a plurality of control resource sets.

In FIG. 8, one control channel is configured by one or a plurality of first resource groups. Here, the first resource group is also referred to as a Control Channel Element (CCE). As illustrated in part (a) of FIG. 8, the control channel may be configured by the CCE being subjected to Localized Mapping. Here, the localized mapping of the control channel may refer to the control channel including the continuous CCEs in the time and frequency domain. In part (a) of FIG. 8, the control channel constituted by the CCEs illustrated by right-upward diagonals is an example of a control channel of the localized mapping. Additionally, in part (a) of FIG. 8, the control channel constituted by the CCEs illustrated by left-upward diagonals is an example of a control channel of the localized mapping. Additionally, in part (a) of FIG. 8, the control channel constituted by the CCEs illustrated by lattice lines is an example of a control channel of the localized mapping. Additionally, in part (a) of FIG. 8, the control channel constituted by the CCE illustrated by horizontal lines is an example of a control channel of the localized mapping. On the other hand, as illustrated in part (b) of FIG. 8, the control channel may be configured by the CCE being subjected to the Distributed Mapping. Here, the distributed mapping of the control channel may refer to the control channel including the discontinuous CCEs in the time and frequency domain. In part (b) of FIG. 8, the control channel constituted by the CCEs illustrated by right-upward diagonals is an example of a control channel of the distributed mapping. Additionally, in part (b) of FIG. 8, the control channel constituted by the CCEs illustrated by lattice lines is an example of a control channel of the distributed mapping.

The control channel mapped to the plurality of control resource sets may be the control channel of the distributed mapping.

The CCE may be configured by a second resource group. Additionally, the CCE may be given by a predetermined number of resource elements. Here, the second resource group is also referred to as a Resource Element Group (REG). One REG may include a predetermined number of resource elements. Additionally, one REG may be given based on at least a predetermined number of OFDM symbols and a predetermined number of subcarriers. Here, the predetermined number of subcarriers may be 12. The predetermined number of subcarriers may be the same as the number of subcarriers included in the resource block. Additionally, one REG may be given based on at least the predetermined number of OFDM symbols included in the resource block.

The number of REGs constituting one CCE or the number of resource elements constituting the CCE is also referred to as an Aggregation Level.

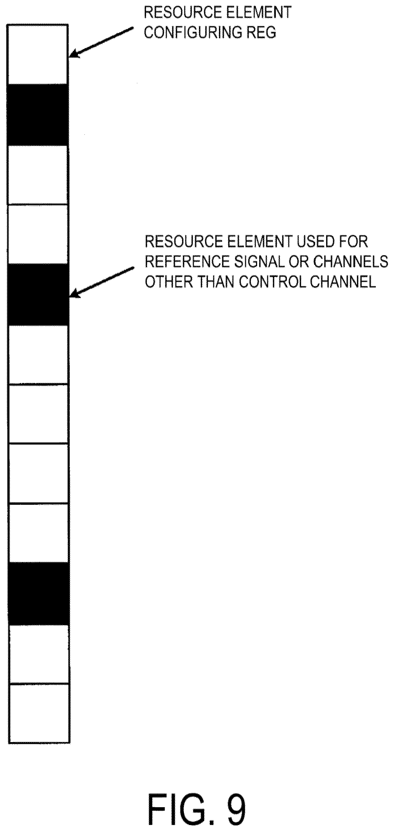

FIG. 9 is a diagram illustrating an example of a configuration of the REG according to an aspect of the present embodiment. The REG may be constituted by subtracting resource elements used for a predetermined number of reference signals and/or channels (including a synchronization signal) other than a predetermined number of control channels from a predetermined number of resource elements that are continuous in the frequency domain. For example, the REG may be constituted by nine resource elements among 12 contiguous resource elements in the frequency domain. The REG may be configured to include a reference signal used to demodulate the REG.

A reference signal corresponding to a control channel will be described below.

A reference signal corresponding to a control channel may mean that the reference signal is available for demodulation of the control channel. A reference signal corresponding to a control channel may mean that an antenna port of the reference signal and an antenna port of the control channel correspond to each other. For example, an antenna port of the reference signal and an antenna port of the control channel that correspond to each other may indicate that the antenna port of the reference signal and the antenna port of the control channel are the same. Additionally, a reference signal corresponding to the control channel may mean that the physical characteristic of the reference signal and the physical characteristic of the control channel are the same. A reference signal corresponding to a control channel may mean that a resource element to which the reference signal is mapped and a resource element to which the control channel is mapped are close to each other. Whether or not a reference signal corresponds to a control channel may be given by the combination of the above descriptions.

An antenna port is defined as one in which a channel conveyed by a certain symbol of a certain antenna port can be estimated from a channel conveyed by another symbol of the same antenna port. That is, for example, in a case that a first physical channel and a first reference signal are conveyed by symbols of the same antenna port, channel compensation of the first physical channel can be performed by the first reference signal. Here, the same antenna port may mean that antenna port numbers (numbers for identifying the antenna ports) are the same. Here, the symbol may be, for example, at least part of the OFDM symbol. Additionally, the symbol may be the resource element.

The physical characteristic may include at least one of, for example, a precoder, a beam (or beam pattern), reception power (reception power value, reception power density, reception strength, etc.), transmit power (transmit power value, transmit power density, transmission strength, etc.), Timing Advance (TA), Angle of Arival (AoA), Doppler shift, delay spread (or maximum delay time, etc.), delay extension (delay expansion, instantaneous delay extension, instantaneous delay expansion, etc.), and Quasi-Collocation (QCL). Note that physical channels having the same physical characteristics may not necessarily mean that the physical channels have exactly the same values of the physical characteristics. That is, the physical channels having the same physical characteristics may mean that the physical channels each have the same average value (or the physical channels have average values close to each other) of the physical characteristics (e.g., a value averaged in the domain of time, frequency, or the like may be used) (or two values are close to each other). The transmit power may be defined by an Energy Per Resource Element (EPRE).

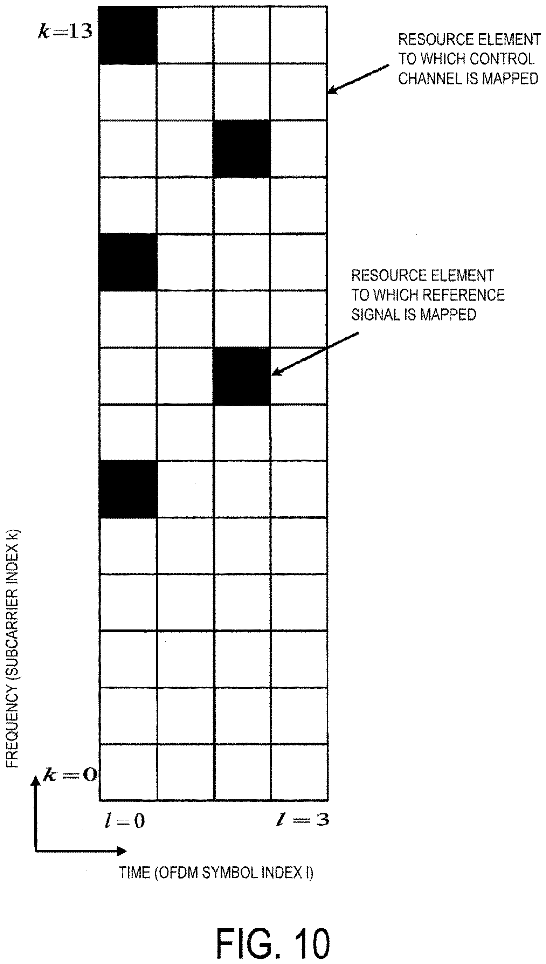

The reference signal may at least correspond to the control channel mapped to a proximate resource in the time and/or frequency. FIG. 10 is a diagram illustrating an example of a corresponding relationship between the reference signal and the control channel according to an aspect of the present embodiment. A sequence known in the base station apparatus 3 and the terminal apparatus 1 may be mapped to the resource element to which the reference signal is mapped. The resource element to which the control channel is mapped may be a resource element to which the downlink control information is mapped. The resource elements in FIG. 10 are identified by the index 1 (1 = 0 to 3) for the OFDM symbol and the index k (k = 0 to 13) for the subcarrier. For example, the resource element (1, k) to which the reference signal is mapped is each of the resource elements (0, 5), (0, 9), (0, 13), (2, 7), and (2, 11).

In one example illustrated in FIG. 10, the resource element of the resource of the control channel corresponding to the reference signal may be a resource element corresponding to 1 = 0 and a resource element corresponding to 1 = 2. Additionally, the resource element corresponding to the reference signal may be a resource element corresponding to 1 = 0 to 3. Additionally, the resource element corresponding to the reference signal may be a resource element corresponding to 1 = 0 to 3 and corresponding to k = 5 to 13. Additionally, the resource element corresponding to the reference signal may be a resource element corresponding to 1 = 0 to 3 and corresponding to k = 3 to 13.

That is, the resource element of the control channel corresponding to the reference signal may be given based on at least being separated from the resource element to which the reference signal is mapped by a predetermined value with respect to the index for the OFDM symbol and/or whether or not to be separated from the resource element to which the reference signal is mapped by a predetermined value with respect to the index for the subcarrier.

In a case that the resource element to which the reference signal is mapped and the resource element to which the control channel is mapped are included in one resource block, it may be assumed that the resource elements of the reference signal and the control channel correspond to each other. In a case that the resource element to which the reference signal is mapped and the resource element to which the control channel is mapped are included in one CCE, it may be assumed that the resource elements of the reference signal and the control channel correspond to each other.

A specific example of the corresponding relationship between the reference signal and the control channel will be described below.

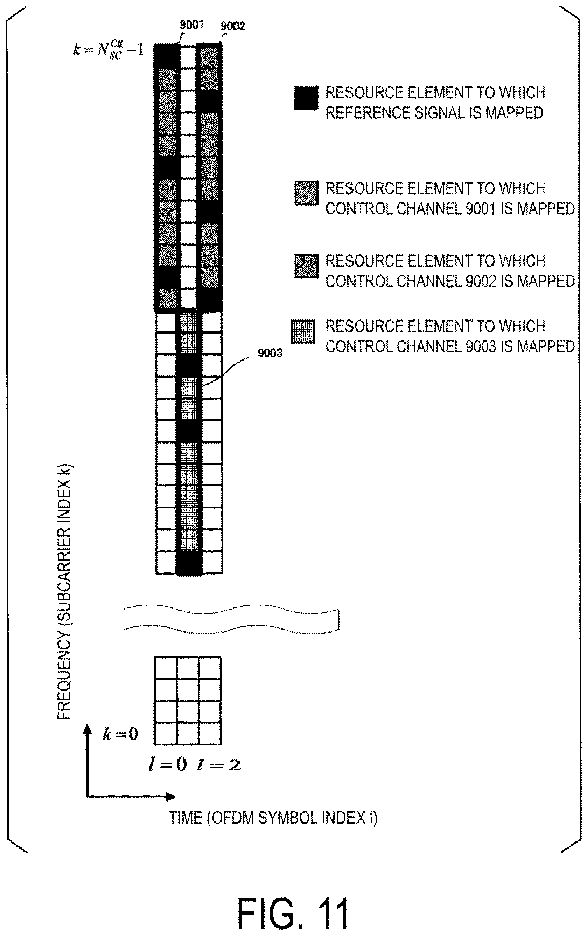

FIG. 11 is a diagram illustrating an example of a corresponding relationship between the reference signal and the control channel in a case that the control channel is locally mapped, according to an aspect of the present embodiment. In the example of FIG. 11, the control channel is assumed to be mapped to one CCE, and the one CCE is assumed to include one REG (or the one CCE includes 12 subcarriers continuous in a frequency direction). On the other hand, in various aspects of the present invention, the control channel is not limited to be mapped to one CCE. Also, in various aspects of the present invention, the one CCE is not limited to include one REG.

In FIG. 11, N^{CR}_{SC} is the number of subcarriers constituting the control resource set. In FIG. 11, the control resource sets include control channels 9001, 9002, and 9003, respectively. In FIG. 11, each control resource set is configured to include nine resource elements to which the control channel is mapped and three resource elements to which the reference signal is mapped, as indicated by bold lines. Here, the reference signal included in the control channel is a reference signal corresponding to the control channel. Here, the mapping of the reference signal may be different for each control channel. Here, in FIG. 11, each of the control channels 9001, 9002, and 9003 includes the resource elements to which the control channel is mapped, but in another example of the control channel, the control channel may be configured without including the resource element to which the reference signal is mapped. In this case, the resource element, which corresponds to the resource element to which the control channel is mapped, to which the reference signal is mapped may be a reference signal corresponding to the control channel.

A reference signal corresponding to a control channel X is also referred to as a reference signal X. That is, in the one example of FIG. 11, the reference signal corresponding to the control channel 9001 is also referred to as a reference signal 9001. Here, the reference signal indicates a set of reference signals. Here, the reference signal 9001, corresponding to the control channel 9001, that corresponds to the control channel 9002 corresponding to a reference signal 9002 may mean that the control channel 9001, the reference signal 9001, the control channel 9002, and the reference signal 9002 correspond to one another.

In FIG. 11, the reference signal 9001 corresponding to the control channel 9001 may correspond to the control channel 9002. Also, the reference signal 9001 may not correspond to the control channel 9002. The reference signal 9001 may not correspond to the control channel 9003. For example, as in the control channel 9001 and the control channel 9002, in a case that the indexes for subcarriers to which two different control channels are mapped are the same, the reference signal 9001 and the control channel 9002 may correspond to each other. Additionally, as in the control channel 9001 and the control channel 9003, in a case that the indexes for subcarriers to which two different control channels are mapped are different from each other, the reference signal 9001 and the control channel 9003 may not correspond to each other.

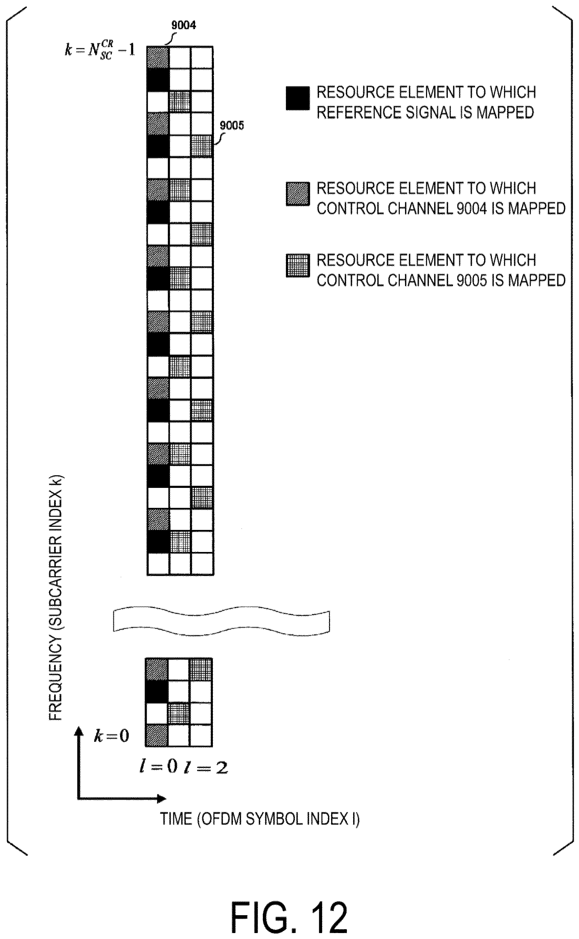

FIG. 12 is a diagram illustrating an example of a corresponding relationship between the reference signal and the control channel in a case that the control channel is distributedly mapped, according to an aspect of the present embodiment. A control channel 9004 is mapped to some of resource elements (resource elements indicated by a right-upward diagonals) of the index 1 = 0 for the OFDM symbol. Additionally, a reference signal is mapped to some of resource elements (resource elements indicated by blacking) of the index 1 = 0 for the OFDM symbol. The reference signal is also referred to as a reference signal 9004. In FIG. 12, for example, the control channel 9004 and the reference signal 9004 are corresponding. On the other hand, the reference signal 9004 and a control channel 9005 may correspond to each other. Also, the reference signal 9004 and the control channel 9005 may not correspond to each other. As illustrated in FIG. 12, in a case that each of the two control channels is subjected to the distributed mapping, a reference signal corresponding to one control channel may correspond to the other control channel.

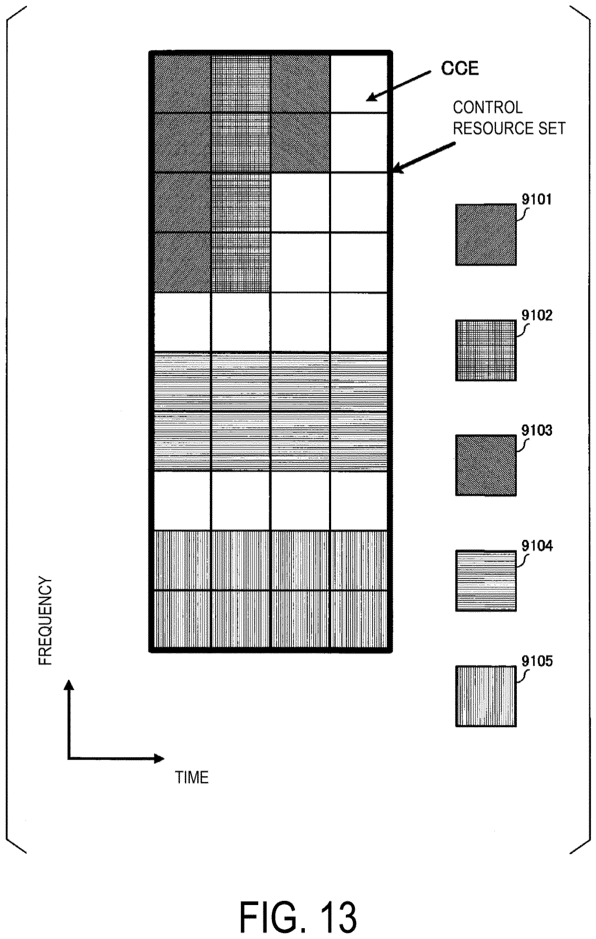

FIG. 13 is a diagram illustrating an example of a corresponding relationship between the control channel and the reference signal in a case that the CCEs included in one control channel are locally mapped, according to an aspect of the present embodiment. In FIG. 13, a horizontal axis corresponds to the time domain and a vertical axis corresponds to the frequency domain. Here, each CCE may include a corresponding reference signal. Also, control channels 9101 to 9105 may include corresponding reference signals, respectively. Here, reference signals corresponding to the control channels 9101 to 9105 are also referred to as reference signals 9101 to 9105, respectively. For example, the reference signal 9101 may correspond to the control channel 9102. Also, the reference signal 9101 may not correspond to the control channel 9103. That is, as illustrated in the control channels 9101 and 9103, in a case that the two control channels are in different aggregation levels, the reference signal 9101 and the control channel 9103 may not correspond to each other. Also, for example, the reference signal 9104 and the control channel 9105 may not correspond to each other. As illustrated in the control channel 9104 and the control channel 9105, even in a case that the aggregation levels of the two different control channels are the same, for example, in a case that the indexes of the subcarriers to which the CCEs constituting the respective control channels are mapped are different from each other, the reference signal 9104 and the control channel 9105 may not correspond to each other.

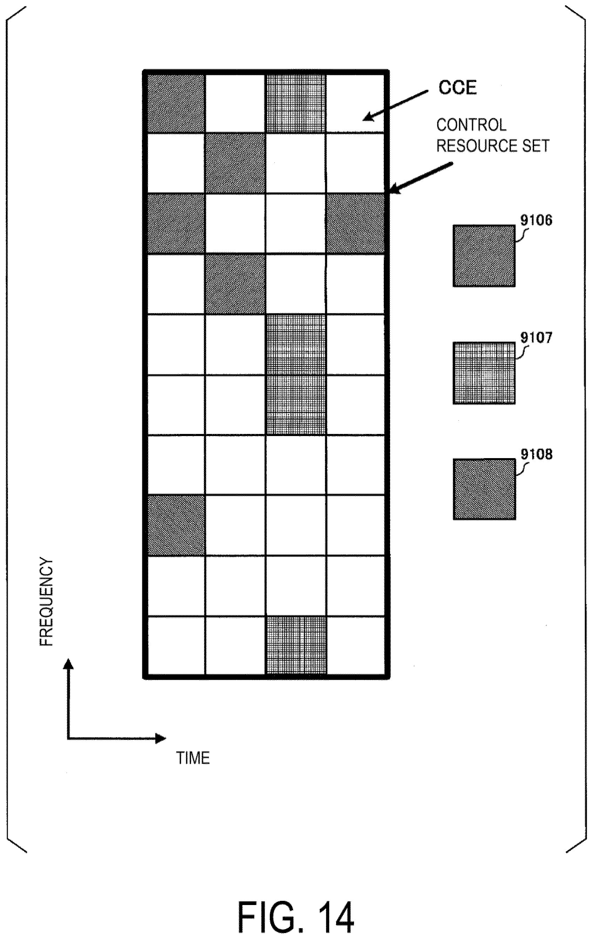

FIG. 14 is a diagram illustrating an example of a corresponding relationship between the control channel and the reference signal in a case that the CCEs included in one control channel are distributedly mapped, according to an aspect of the present embodiment. In FIG. 14, a horizontal axis corresponds to the time domain and a vertical axis corresponds to the frequency domain. As in control channels 9106 to 9108, in a case that the control channels are subjected to the distributed mapping, a reference signal 9106 corresponding to the control channel 9106 may correspond to the control channels 9107 and 9108, or may not correspond thereto.

A procedure of the terminal apparatus for monitoring the control channel will be described below. Here, "the same physical characteristic being included" may mean that "the physical characteristics are assumed to be the same by the terminal apparatus 1". Further, "different physical characteristics being included" may mean that "the physical characteristics are not assumed to be the same by the terminal apparatus 1".

The terminal apparatus 1 may perform monitoring of the control channel based on at least some or all of various configurations for monitoring. For example, a configuration for monitoring may include at least some or all of a configuration relating to resource allocation of the control resource set, a configuration of the reference signal, a configuration of the aggregation level, and a configuration of the mapping of the control channel. For example, the configuration relating to the resource allocation of the control resource set may be whether the control resource set configured to the terminal apparatus 1 includes only continuous resources or includes discontinuous resources. Additionally, the configuration of the reference signal may be whether the reference signal is a reference signal specific to the terminal apparatus 1, a reference signal specific to the control channel, or a reference signal common to a group of terminal apparatuses including at least the terminal apparatus 1. Additionally, the configuration of the aggregation level may be a configuration of an aggregation level at which the terminal apparatus 1 is indicated to monitor. Additionally, the configuration of the mapping of the control channel may be a configuration of the number of OFDM symbols to which the control channel is mapped, or a configuration whether the mapping of the control channel is the localized mapping or the distributed mapping.

The terminal apparatus 1 performs monitoring of the control channel based on at least the various configurations for monitoring. Here, the number of the control channels monitored by the terminal apparatus 1 is not limited to one in one control resource set. That is, the terminal apparatus 1 may monitor a plurality of control channels configured to the control resource set. In addition, the number of the control resource sets configured to the terminal apparatus may be one or multiple in a predetermined period (e.g., subframe, slot, or the like). Furthermore, the various configurations for monitoring may be specific configurations for each control resource set configured to the terminal apparatus 1.

In the control channel monitored by the terminal apparatus 1, the downlink control information addressed to the terminal apparatus 1 is not necessarily acquired. The terminal apparatus 1 may perform, for the control channel, demodulation based on the reference signal corresponding to the control channel (or a set of resource elements to which the reference signal may be mapped), and may attempt to decode the downlink control information from a modulation symbol (complex-valued symbol) after the demodulation. Here, the modulation symbol is a symbol after the modulation, which is mapped to at least one resource element. The modulation includes Binary Phase Shift Keying (BPSK), Quardrature Phase Shift Keying (QPSK), Quardrature Amplitude Modulation (16QAM), 64QAM, and the like.

The downlink control information may include information indicating a destination of the downlink control information. Additionally, to the downlink control information, a Cyckic Redandancy Check (CRC) sequence to be masked by a sequence given based on the information indicating the destination of the downlink control information may be added. Here, the sequence given based on the information indicating the destination of the downlink control information may be a sequence allocated to the terminal apparatus 1 or a sequence given by information received from the base station apparatus 3. Here, the information specifying the destination of the downlink control information may be a predetermined sequence for masking the CRC sequence given based on the bit sequence of the downlink control information. Furthermore, here, a first sequence masking a second sequence may be, for example, taking a modulo 2 operation between the first sequence and the second sequence. For example, a sequence oₖ obtained by the first sequence c₁ₖ being masked by the second sequence c₂ₖ may be given by oₖ = mod2 (c₁ₖ + c₂ₖ). Here, mod2 (*) is an operator that performs the modulo 2 operation on *.

For example, the terminal apparatus 1 receives the downlink control information to which a third sequence given by the CRC sequence masked by the predetermined sequence is added. Next, the terminal apparatus 1 extracts the third sequence from the received downlink control information, and generates a fifth sequence by masking the third sequence by a fourth sequence. Here, the fourth sequence may be, for example, a specific sequence for the terminal apparatus 1 (e.g., Cell specific-Radio Network Temporary Identifier (C-RNTI)), the fourth sequence may be a sequence shared by at least the group of the terminal apparatuses 1 including a terminal apparatus (e.g., Group specific RNTI). Additionally, the fourth sequence may be given based on descriptions of the specification or the like (e.g., Common C-RNTI). Additionally, the fourth sequence may be a sequence reported by the base station apparatus 3 in step 5102 in the first initial connection procedure (e.g. Temporary C-RNTI). Whether or not the downlink control information has been successfully decoded may be given based on whether or not the fifth sequence satisfies a predetermined condition for the CRC sequence. Here, the predetermined condition for the CRC sequence may be, for example, that the fifth sequence is known in the terminal apparatus 1. Furthermore, the predetermined condition for the CRC sequence may be, for example, that all bits included in the fifth sequence are 0 or are 1.

The control channel may be referred to as a control channel candidate. Additionally, monitoring the control channel candidate by the terminal apparatus 1 may be referred to as Blind Decoding. The control channel candidate may be a resource that the terminal apparatus 1 attempts to decode the control channel. The terminal apparatus 1 may attempt to decode the control channel in the control channel candidate.

A method of receiving a channel of the terminal apparatus 1 will be described below. In the following, as an example of the method of receiving the channel, a method of receiving the control channel is described as an example, but various aspects of the present embodiment are not limited to the method of receiving the control channel. For example, a method of receiving the shared channel may be employed, or a method of receiving the random access channel may be employed.

The terminal apparatus 1 can monitor a first control channel and a second control channel. Here, for example, mapping of the first control channel and/or the second control channel may be a first mapping or a second mapping. For example, the terminal apparatus 1 may change a demodulation method of a first channel and/or a second channel based on at least a mapping configuration of the first control channel and/or the second control channel. Here, a reference signal corresponding to the first control channel is referred to as a first reference signal.

Here, unless otherwise noted in the present embodiment, the first control channel and the second control channel may be included in the same control resource set. Also, in a case that the first control channel is included in the first control resource set and the second control channel is included in the second control resource set, the first reference signal and the second control channel may include the same physical characteristic.

For example, in a case that the mapping of the first control channel and the second control channel is the first mapping, the first reference signal and the second control channel may include the same physical characteristic. Additionally, in the case that the mapping of the first control channel and the second control channel is the first mapping, the terminal apparatus 1 may assume that the first reference signal and the second control channel include the same physical characteristic. Additionally, in the case that the mapping of the first control channel and the second control channel is the first mapping, the terminal apparatus 1 may use the first reference signal for demodulation of the first control channel and the second control channel.

For example, in a case that the mapping of the first control channel and the second control channel is the second mapping, the first reference signal and the second control channel may include different physical characteristics. Additionally, in the case that the mapping of the first control channel and the second control channel is the second mapping, the terminal apparatus 1 may assume that the first reference signal and the second control channel include different physical characteristics. Additionally, in the case that the mapping of the first control channel and the second control channel is the second mapping, the terminal apparatus 1 may use the first reference signal for demodulation of the first control channel and use a second reference signal for demodulation of the second control channel.

For example, in a case that the mapping of the first control channel is the first mapping and the mapping of the second control channel is the second mapping, the first reference signal and the second control channel may include different physical characteristics. Additionally, in the case that the mapping of the first control channel is the first mapping and the mapping of the second control channel is the second mapping, the terminal apparatus 1 may assume that the first reference signal and the second control channel include different physical characteristics. Additionally, in the case that the mapping of the first control channel is the first mapping and the mapping of the second control channel is the second mapping, the terminal apparatus 1 may use the first reference signal for demodulation of the first control channel and the second reference signal for demodulation of the second control channel.

The first mapping may be, for example, localized mapping. Here, the mapping of a control channel being the localized mapping may mean that the CCE constituting the control channel is locally mapped. Additionally, the mapping of a control channel being the localized mapping may mean that the REG constituting the control channel is locally mapped. Additionally, the mapping of a control channel being the localized mapping may mean that the resource element constituting the control channel is locally mapped. That is, the mapping of the control channel being the localized mapping may mean that one or a plurality of resource elements constituting the control channel is continuously mapped in the frequency domain and/or the time domain. Furthermore, the first mapping may also be the distributed mapping. Here, the mapping of a control channel being the distributed mapping may mean that the CCE constituting the control channel is distributedly mapped. Additionally, the mapping of a control channel being the distributed mapping may mean that the REG constituting the control channel is distributedly mapped. Additionally, the mapping of a control channel being the distributed mapping may mean that a plurality of resource elements constituting the control channel is distributedly mapped in the frequency domain and/or the time domain.

The second mapping may be, for example, the localized mapping. Furthermore, the second mapping may also be the distributed mapping. In a case that the first mapping is the distributed mapping, the second mapping may be the localized mapping. Additionally, in a case that the first mapping is the localized mapping, the second mapping may be the distributed mapping. That is, the first mapping and the second mapping may be dedicatedly configured.

Whether or not the first reference signal and the second control channel include the same physical characteristic may be given based on at least some or all of factors A1 to A5. (A1) The configuration of the mapping of the first control channel and the second control channel, (A2) Whether or not the first resource to which the first control channel is mapped and the second resource to which the second control channel is mapped at least partially overlap with each other, (A3) Whether or not a first aggregation level configured for the first control channel and a second aggregation level configured for the second control channel correspond to each other, (A4) Whether or not a first antenna port for the first reference signal and a second antenna port for the second control channel correspond to each other, and (A5) Whether or not at least a portion of the second control channel is included in a predetermined range including the first reference signal.

Here, in the factor (A2), whether or not the first resource and the second resource at least a partially overlap with each other may refer to whether or not the first resource and the second resource at least partially have the same frequency (or index, index for subcarrier, PRB, index for PRB).

Here, in the factor (A3), for example, the first aggregation level and the second aggregation level being corresponding to each other may mean that the first aggregation level and the second aggregation level are the same. Furthermore, the first aggregation level and the second aggregation level being not corresponding to each other may mean that the first aggregation level and the second aggregation level are different from each other. Furthermore, the first aggregation level and the second aggregation level being corresponding to each other may mean that the first aggregation level and the second aggregation level are associated with each other. Furthermore, the first aggregation level and the second aggregation level being not corresponding to each other may mean that the first aggregation level and the second aggregation level are not associated with each other.

For example, in a case that the first control channel and the second control channel are mapped by the first mapping, the first reference signal and the second control channel may include the same physical characteristic. Additionally, in a case that the first control channel and the second control channel are mapped by the second mapping, the first reference signal and the second control channel may include different physical characteristics. Additionally, in a case that the first control channel is mapped by the first mapping and the second control channel is mapped by the second mapping, the first reference signal and the second control channel may include different physical characteristics.

For example, in a case that the first resource to which the first control channel is mapped and the second resource to which the second control channel is mapped at least partially overlap with each other, the first reference signal and the second control channel may include the same physical characteristic. Additionally, in a case that the first resource to which the first control channel is mapped and the second resource to which the second control channel is mapped do not overlap with each other, the first reference signal and the second control channel may include different physical characteristics.

For example, in a case that the first aggregation level configured for the first control channel and the second aggregation level configured for the second control channel correspond to each other, the first reference signal and the second control channel may include the same physical characteristic. Additionally, in a case that the first aggregation level configured for the first control channel and the second aggregation level configured for the second control channel do not correspond to each other, the first reference signal and the second control channel may include different physical characteristics. That is, the physical characteristics of the reference signal and the control channel may be associated based on the aggregation level of the control channel.

For example, in a case that the first antenna port for the first reference signal and the second antenna port for the second control channel correspond to each other, the first reference signal and the second control channel may include the same physical characteristic. Additionally, in a case that the first antenna port for the first reference signal and the second antenna port for the second control channel do not correspond to each other, the first reference signal and the second control channel may include different physical characteristics. That is, the physical characteristics of the reference signal and the control channel may be associated based on the corresponding relationship between the antenna ports of the control channel and the reference signal.

For example, in a case that the second control channel is included in a predetermined range including the first reference signal, the first reference signal and the second control channel may include the same physical characteristic. Additionally, in a case that the second control channel is not included in the predetermined range including the first reference signal, the first reference signal and the second control channel may include different physical characteristics.

Here, the predetermined range including the first reference signal may be a range expressed by the time domain. That is, the predetermined range including the first reference signal may be a predetermined period including the first reference signal. For example, the predetermined range including the first reference signal may be given by the number of OFDM symbols. That is, for example, in a case that the second control channel is included in a period given by the set of the OFDM symbols including the first reference signal, the first reference signal and the second control channel may include the same physical characteristic. Additionally, in a case that the second control channel is not included in the period given by the set of the OFDM symbols including the first reference signal, the first reference signal and the second control channel may include different physical characteristics.

The predetermined range including the first reference signal may be granularity of the physical characteristic of the first reference signal. For example, in the terminal apparatus 1, in a case that the granularity of the physical characteristic of the first reference signal is configured to be X symbols, the second control channel included in a period of X symbols from the first reference signal and the first reference signal may include the same physical characteristic. The granularity of the physical characteristic of the first reference signal may be a range in which the first reference signal is used for demodulation in the terminal apparatus 1. Here, the granularity of the physical characteristic of the first reference signal may be given based at least on the RRC signaling.

For example, the predetermined range including the first reference signal may be given by the number of slots. For example, in a case that the second control channel is included in a period given by one slot including the first reference signal, the first reference signal and the second control channel may include the same physical characteristic. Additionally, in a case that the second control channel is not included in the period given by one slot including the first reference signal, the first reference signal and the second control channel may include different physical characteristics. The granularity of the physical characteristic of the first reference signal may be given based on the slot.

For example, the predetermined range including the first reference signal may be given by the number of subframes. For example, in a case that the second control channel is included in a period given by one subframe including the first reference signal, the first reference signal and the second control channel may include the same physical characteristic. Additionally, in a case that the second control channel is not included in the period given by one subframe including the first reference signal, the first reference signal and the second control channel may include different physical characteristics. The granularity of the physical characteristic of the first reference signal may be given based on the subframe.

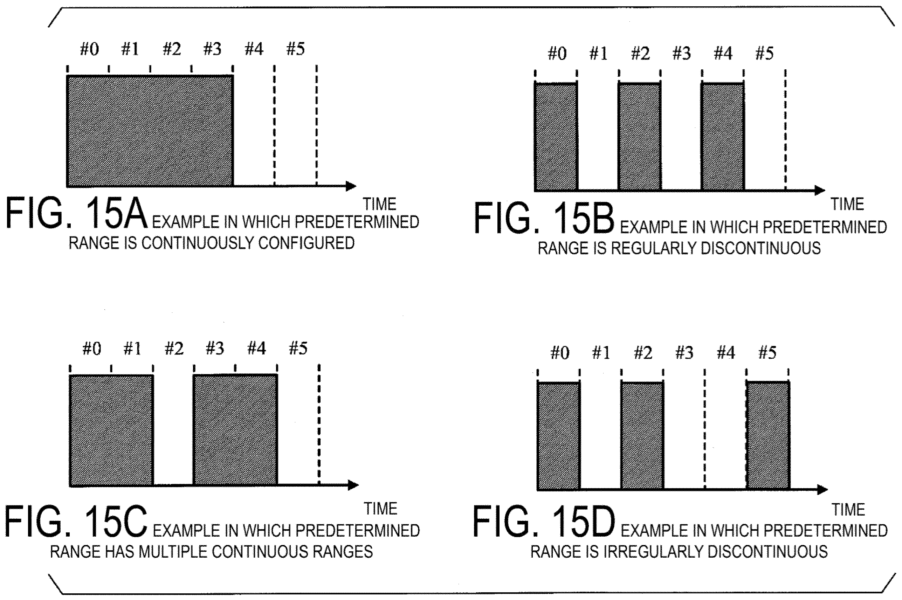

The predetermined range including the first reference signal may be given by a discontinuous region. FIGS. 15A to 15D are diagrams each of which illustrates an example of the predetermined range including the first reference signal according to an aspect of the present embodiment. Indexes from #0 to #5 illustrated in FIGS. 15A to 15D may be indexes for the OFDM symbols, may be indexes for the slots, or may be indexes for the subframes. Here, descriptions will be given assuming that the first reference signal is included in the index #0. As illustrated in FIG. 15A, the predetermined range including the first reference signal may be continuously configured. Additionally, as illustrated in FIG. 15B, the predetermined range including the first reference signal may be regularly discontinuously configured. Additionally, as illustrated in FIG. 15C, the predetermined range including the first reference signal may include a plurality of continuous ranges. Additionally, as illustrated in FIG. 15D, the predetermined range including the first reference signal may be irregularly discontinuously configured.

The predetermined range including the first reference signal included in the CSS may be given based on descriptions of the specification or the like. In other words, the predetermined range including the first reference signal included in the CSS may be determined without the terminal apparatus 1 detecting necessary information. The predetermined range including the first reference signal included in the USS may be given at least based on the dedicated RRC signaling. Information indicating the predetermined range including the first reference signal included in the USS may be mapped to the DCCH.

For example, in a case that the mapping of at least one control channel of the first control channel and the second control channel is the first mapping and the first resource to which the first control channel is mapped and the second resource to which the second control channel is mapped at least partially overlap with each other, the first reference signal and the second control channel may include the same physical characteristic.

For example, in a case that the mapping of at least one control channel of the first control channel and the second control channel is the first mapping and the first aggregation level configured for the first control channel and the second aggregation level configured for the second control channel are the same, the first reference signal and the second control channel may include the same physical characteristic. That is, the physical characteristics of the control channel and the reference signal may be associated based on the mapping of the control channels and the aggregation levels of the control channels.

For example, in a case that the first resource to which the first control channel is mapped and the second resource to which the second control channel is mapped at least partially overlap with each other and the first aggregation level configured for the first control channel and the second aggregation level configured for the second control channel are the same, the first reference signal and the second control channel may include the same physical characteristic. That is, the physical characteristics of the control channel and the reference signal may be associated based on whether or not the resources of the control channels overlap and the aggregation levels of the control channels.

For example, in a case that the first resource to which the first control channel is mapped and the second resource to which the second control channel is mapped at least partially overlap with each other and the first antenna port for the first reference signal and the second antenna port for the second control channel correspond to each other, the first reference signal and the second control channel may include the same physical characteristic. That is, the physical characteristics of the control channel and the reference signal may be associated based on whether or not the resources of the control channels overlap and the antenna ports of the control channels.

For example, in a case that the mapping of the first control channel and the second control channel is the first mapping, the first resource to which the first control channel is mapped and the second resource to which the second control channel is mapped at least partially overlap with each other, and the first antenna port for the first reference signal and the second antenna port for the second control channel correspond to each other, the first reference signal and the second control channel may include the same physical characteristic.

Additionally, for example, in a case that the mapping of the first control channel and the second control channel is the second mapping, the first resource to which the first control channel is mapped and the second resource to which the second control channel is mapped at least partially overlap with each other, and the first antenna port for the first reference signal and the second antenna port for the second control channel correspond to each other, the first reference signal and the second control channel may include different physical characteristics.

Additionally, for example, in a case that the mapping of the first control channel is the first mapping and the mapping of the second control channel is the second mapping, the first resource to which the first control channel is mapped and the second resource to which the second control channel is mapped at least partially overlap with each other, and the first antenna port for the first reference signal and the second antenna port for the second control channel correspond to each other, the first reference signal and the second control channel may include different physical characteristics.

Additionally, at least in a case that the mapping of the first control channel and the second control channel is the first mapping, the first resource to which the first control channel is mapped and the second resource to which the second control channel is mapped do not overlap with each other, and the first antenna port for the first reference signal and the second antenna port for the second control channel correspond to each other, the first reference signal and the second control channel may include different physical characteristics.

Additionally, at least in a case that the mapping of the first control channel and the second control channel is the first mapping, the first resource to which the first control channel is mapped and the second resource to which the second control channel is mapped overlap with each other, and the first antenna port for the first reference signal and the second antenna port for the second control channel do not correspond to each other, the first reference signal and the second control channel may include different physical characteristics.

For example, in a case that the mapping of the first control channel and the second control channel is the first mapping and the second control channel is included in the predetermined range including the first reference signal, the first reference signal and the second control channel may include the same physical characteristic.

For example, in a case that the mapping of the first control channel and the second control channel is the second mapping and the second control channel is included in the predetermined range including the first reference signal, the first reference signal and the second control channel may include different physical characteristics.

For example, in a case that the first resource to which the first control channel is mapped and the second resource to which the second control channel is mapped at least partially overlap with each other and the second control channel is included in the predetermined range including the first reference signal, the first reference signal and the second control channel may include the same physical characteristic.

Here, whether or not the first reference signal and the second control channel include the same physical characteristic may be given at least based on a first RRC signaling.

Additionally, the mapping of the first control channel may be given at least based on the first RRC signaling. Additionally, the mapping of the second control channel may be given at least based on a second RRC signaling. Additionally, the mapping of the first control channel and the mapping of the second control channel may be given at least based on a third RRC signaling.

Additionally, allocation information of the first resource to which the first control channel is mapped may be given at least based on the first RRC signaling. Additionally, allocation information of the second resource to which the second control channel is mapped may be given at least based on the second RRC signaling. Additionally, the allocation information of the first resource to which the first control channel is mapped and the allocation information of the second resource to which the second control channel is mapped may be given at least based on the third RRC signaling.

Additionally, an index of the first antenna port for the first reference signal may be given at least based on the first RRC signaling. Additionally, an index of the second antenna port for the second control channel may be given at least based on the second RRC signaling. Additionally, the index of the first antenna port for the first reference signal and the index of the second antenna port for the second reference signal may be given at least based on the third RRC signaling.

The predetermined range including the first reference signal may be given at least based on the first RRC signaling.

Here, whether or not the first reference signal and the second control channel include the same physical characteristic may be given at least based on first downlink control information.

Additionally, the mapping of the first control channel may be given at least based on the first downlink control information. Additionally, the mapping of the second control channel may be given at least based on second downlink control information. Additionally, the mapping of the first control channel and the mapping of the second control channel may be given at least based on third downlink control information.

Additionally, the allocation information of the first resource to which the first control channel is mapped may be given at least based on the first downlink control information. Additionally, the allocation information of the second resource to which the second control channel is mapped may be given at least based on the second downlink control information. Additionally, the allocation information of the first resource to which the first control channel is mapped and the allocation information of the second resource to which the second control channel is mapped may be given at least based on the third downlink control information.

Additionally, the index of the first antenna port for the first reference signal may be given at least based on the first downlink control information. Additionally, the index of the second antenna port for the second control channel may be given at least based on the second downlink control information. Additionally, the index of the first antenna port for the first reference signal and the index of the second antenna port for the second reference signal may be given at least based on the third downlink control information.

The predetermined range including the first reference signal may be given at least based on the first downlink control information.

Here, the first downlink control information may include information to be used for a group of terminal apparatuses including the terminal apparatus 1. Additionally, the first downlink control information may include information broadcast at a predetermined cell. Additionally, the second downlink control information may include information to be used for the group of terminal apparatuses including the terminal apparatus 1. Additionally, the second downlink control information may include information broadcast at a predetermined cell. Additionally, the third downlink control information may include information to be used for the group of terminal apparatuses including the terminal apparatus 1. Additionally, the third downlink control information may include information broadcast at a predetermined cell.

Additionally, whether or not the first reference signal and the second control channel include the same physical characteristic may be given at least based on a sixth sequence for masking the CRC added to the first control channel and/or a seventh sequence for masking the CRC added to the second control channel. For example, in a case that the sixth sequence and the seventh sequence are the same, the first reference signal and the second control channel may include the same physical characteristic. Additionally, in a case that the sixth sequence and the seventh sequence correspond to each other, the first reference signal and the second control channel may include the same physical characteristic. Additionally, in a case that the sixth sequence and the seventh sequence are different from each other, the first reference signal and the second control channel may include different physical characteristics. Additionally, in a case that the sixth sequence and the seventh sequence do not correspond to each other, the first reference signal and the second control channel may include different physical characteristics. The sixth sequence may be a sequence for masking the CRC added to the first control channel. Additionally, the seventh sequence may be a sequence for masking the CRC added to the second control channel.

Additionally, in a case that the sixth sequence and the seventh sequence are a predetermined sequence, the first reference signal and the second control channel may include the same physical characteristic. Additionally, in a case that the sixth sequence and the seventh sequence are different from the predetermined sequence, the first reference signal and the second control channel may include different physical characteristics. Additionally, in a case that the sixth sequence is the predetermined sequence and the seventh sequence is different from the predetermined sequence, the first reference signal and the second control channel may include different physical characteristics. Here, the predetermined sequence may be a sequence common to the cells. Additionally, the predetermined sequence may be a sequence commonly used in the group of terminal apparatuses including the terminal apparatus 1. In addition, the predetermined sequence may be the RA-RNTI. In addition, the predetermined sequence may be the Temporary C-RNTI.

Additionally, whether the mapping of the first control channel is the first mapping or the second mapping may be given at least based on whether or not the sixth sequence is the predetermined sequence. Additionally, whether the mapping of the second control channel is the first mapping or the second mapping may be given at least based on whether or not the seventh sequence is the predetermined sequence.

Additionally, whether the mapping of the first control channel is the first mapping or the second mapping may be given at least based on the control resource set including the first control channel. For example, in a case that the control resource set including the first control channel corresponds to the USS, the mapping of the first control channel may be the first mapping. Additionally, in a case that the control resource set including the first control channel corresponds to the CSS, the mapping of the first control channel may be the second mapping. Additionally, in a case that the control resource set including the second control channel corresponds to the USS, the mapping of the second control channel may be the first mapping. Additionally, in a case that the control resource set including the second control channel corresponds to the CSS, the mapping of the second control channel may be the second mapping.

Whether or not the antenna ports of the first reference signal and the second control channel correspond to each other may be given at least based on some or all of factors B1 to B4. (B1) The configuration of the mapping of the first control channel and the second control channel, (B2) Whether or not the first resource to which the first control channel is mapped and the second resource to which the second control channel is mapped at least partially overlap with each other, (B3) Whether or not the first aggregation level configured for the first control channel and the second aggregation level configured for the second control channel correspond to each other, and (B4) Whether or not at least a portion of the second control channel is included in the predetermined range including the first reference signal.

For example, in a case that the mapping of the first control channel and the second control channel is the first mapping, the antenna ports of the first reference signal and the second control channel may correspond to each other. Additionally, in a case that the mapping of the first control channel and the second control channel is the second mapping, the antenna ports of the first reference signal and the second control channel may not correspond to each other. Additionally, in a case that the mapping of the first control channel is the first mapping and the mapping of the second control channel is the second mapping, the antenna ports of the first reference signal and the second control channel may not correspond to each other.

For example, in a case that the first resource to which the first control channel is mapped and the second resource to which the second control channel is mapped at least partially overlap with each other, the antenna ports of the first reference signal and the second control channel may correspond to each other. Additionally, in a case that the first resource to which the first control channel is mapped and the second resource to which the second control channel is mapped do not overlap with each other, the antenna ports of the first reference signal and the second control channel may not correspond to each other.

For example, in a case that the first aggregation level configured for the first control channel and the second aggregation level configured for the second control channel correspond to each other, the antenna ports of the first reference signal and the second control channel may correspond to each other. Additionally, in a case that the first aggregation level configured for the first control channel and the second aggregation level configured for the second control channel do not correspond to each other, the antenna ports of the first reference signal and the second control channel may not correspond to each other.

For example, in a case that at least a portion of the second control channel is included in the predetermined range including the first reference signal, the antenna ports of the first reference signal and the second control channel may correspond to each other. Additionally, in a case that the second control channel is not included in the predetermined range including the first reference signal, the antenna ports of the first reference signal and the second control channel may not correspond to each other.

For example, in a case that the mapping of the first control channel and the second control channel is the first mapping and the first resource to which the first control channel is mapped and the second resource to which the second control channel is mapped at least partially overlap with each other, the antenna ports of the first reference signal and the second control channel may correspond to each other.

For example, in a case that the mapping of the first control channel and the second control channel is the first mapping and the first aggregation level configured for the first control channel and the second aggregation level configured for the second control channel correspond to each other, the antenna ports of the first reference signal and the second control channel may correspond to each other.

For example, in a case that the first resource to which the first control channel is mapped and the second resource to which the second control channel is mapped at least partially overlap with each other and the first aggregation level configured for the first control channel and the second aggregation level configured for the second control channel correspond to each other, the antenna ports of the first reference signal and the second control channel may correspond to each other.

For example, in a case that the mapping of the first control channel and the second control channel is the first mapping and the second control channel is included in the predetermined range including the first reference signal, the antenna ports of the first reference signal and the second control channel may correspond to each other.

For example, in a case that the first resource to which the first control channel is mapped and the second resource to which the second control channel is mapped at least partially overlap with each other and the second control channel is included in the predetermined range including the first reference signal, the antenna ports of the first reference signal and the second control channel may correspond to each other.

For example, in a case that the physical characteristics of the first reference signal and the second control channel are the same, the number of resource elements included in the REG constituting the first control channel and the number of resource elements included in the REG constituting the second control channel may be different from each other. Additionally, in a case that the physical characteristics of the first reference signal and the second control channel are different from each other, the number of resource elements included in the REG constituting the first control channel and the number of resource elements included in the REG constituting the second control channel may be the same.

For example, in a case that the antenna ports of the first reference signal and the second control channel are the same, the number of resource elements included in the REG constituting the first control channel and the number of resource elements included in the REG constituting the second control channel may be different from each other. Additionally, in a case that the antenna ports of the first reference signal and the second control channel are different from each other, the number of resource elements included in the REG constituting the first control channel and the number of resource elements included in the REG constituting the second control channel may be the same.

An apparatus configuration of the terminal apparatus 1 according to the present embodiment will be described below.

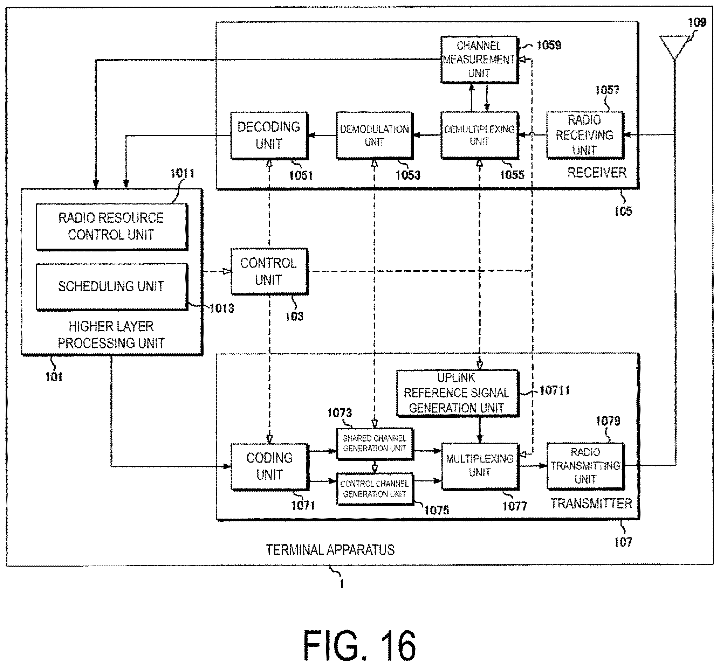

FIG. 16 is a schematic block diagram illustrating a configuration example of the terminal apparatus 1 according to an aspect of the present embodiment. As illustrated in the diagram, the terminal apparatus 1 is configured to include at least one of a higher layer processing unit 101, a control unit 103, a receiver 105, a transmitter 107, and a transmit and/or receive antenna 109. The higher layer processing unit 101 is configured to include at least one of a radio resource control unit 1011 and a scheduling unit 1013. The receiver 105 is configured to include at least one of a decoding unit 1051, a demodulation unit 1053, a demultiplexing unit 1055, a radio receiving unit 1057, and a channel measurement unit 1059. The transmitter 107 is configured to include at least one of a coding unit 1071, a shared channel generation unit 1073, a control channel generation unit 1075, a multiplexing unit 1077, a radio transmitting unit 1079, and an uplink reference signal generation unit 10711.

The higher layer processing unit 101 outputs uplink data generated by a user operation or the like, to the transmitter 107. The higher layer processing unit 101 performs processing of a Medium Access Control (MAC) layer, a Packet Data Convergence Protocol (PDCP) layer, a Radio Link Control (RLC) layer, and a Radio Resource Control (RRC) layer. Furthermore, the higher layer processing unit 101 generates control information for control of the receiver 105 and the transmitter 107 based on the downlink control information or the like received by the control channel, and outputs the generated control information to the control unit 103. Note that part of the processing of the medium access control layer may be performed in the control unit 103.

The radio resource control unit 1011 included in the higher layer processing unit 101 manages various pieces of configuration information of the terminal apparatus 1 itself. Furthermore, the radio resource control unit 1011 generates information to be mapped to each uplink channel, and outputs the generated information to the transmitter 107.

The scheduling unit 1013 stores the downlink control information received through the receiver 105. The scheduling unit 1013 controls the transmitter 107 via the control unit 103 so as to transmit the shared channel in accordance with a received uplink grant. The scheduling unit 1013 controls the receiver 105 via the control unit 103 so as to receive the shared channel, in the subframe in which a downlink grant is received, in accordance with the received downlink grant. Here, the grant may be information indicating a resource allocated to the shared channel.

In accordance with the control information originating from the higher layer processing unit 101, the control unit 103 generates a control signal for control of the receiver 105 and the transmitter 107. The control unit 103 outputs the generated control signal to the receiver 105 and the transmitter 107 to control the receiver 105 and the transmitter 107.

The control unit 103 may include a function of performing part of the processing of the medium access control layer (e.g., a retransmission indication, or the like). The control unit 103 may be a function included in the higher layer processing unit 101.

In accordance with the control signal input from the control unit 103, the receiver 105 demultiplexes, demodulates, and decodes a reception signal received from the base station apparatus 3 through the transmit and/or receive antenna 109, and outputs the resulting information from the decoding to the higher layer processing unit 101.

The radio receiving unit 1057 demodulates a downlink signal received through the transmit and/or receive antenna 109, and converts the demodulated analog signal to a digital signal. For example, the radio receiving unit 1057 may perform Fast Fourier Transform (FFT) on the digital signal, and extract a signal in the frequency domain.

The demultiplexing unit 1055 demultiplexes the extracted signal into the control channel (or the control resource set), the shared channel, and the reference signal. The demultiplexing unit 1055 outputs the reference signal resulting from the demultiplexing, to the channel measurement unit 1059 and/or the demultiplexing unit 1055.

The demultiplexing unit 1055 performs Channel Equalization of the control channel and/or the shared channel. Here, which reference signal corresponds to the control channel and/or the shared channel may be given based on some or all of the factors A1 to A5 or the factors B1 to B4. The control channel and/or the shared channel after the channel equalization is output to the demodulation unit 1053.

The demodulation unit 1053 demodulates the control channel and the shared channel for a modulation scheme such as BPSK, QPSK, 16QAM, 64QAM, and the like, and outputs the result of the demodulation to the decoding unit 1051.

The decoding unit 1051 decodes the downlink data, and outputs, to the higher layer processing unit 101, the downlink data resulting from the decoding.

The transmitter 107 generates an uplink reference signal in accordance with the control signal input from the control unit 103, codes and modulates the uplink data and uplink control information input from the higher layer processing unit 101, multiplexes the shared channel, the control channel, and the reference signal, and transmits a result of the multiplexing to the base station apparatus 3 through the transmit and/or receive antenna 109.

The coding unit 1071 codes the control information and the uplink data input from the higher layer processing unit 101 to generate coded bits, and outputs the coded bits to the shared channel generation unit 1073 and/or the control channel generation unit 1075.

The shared channel generation unit 1073 may modulate the coded bits input from the coding unit 1071 to generate a modulation symbol, generate the shared channel by performing at least DFT on the modulation symbol, and output the generated channel to the multiplexing unit 1077. The shared channel generation unit 1073 may modulate the coded bits input from the coding unit 1071 to generate the shared channel, and output the generated channel to the multiplexing unit 1077.

The control channel generation unit 1075 generates the control channel based on the coded bits input from the coding unit 1071 and/or the scheduling request, and outputs the generated channel to the multiplexing unit 1077.

The uplink reference signal generation unit 10711 generates the uplink reference signal, and outputs the generated uplink reference signal to the multiplexing unit 1077.

The multiplexing unit 1077 multiplexes the signal input from the shared channel generation unit 1073 and/or the signal input from the control channel generation unit 1075 and/or the uplink reference signal input from the uplink reference signal generation unit 10711, in accordance with the control signal input from the control unit 103, on the uplink resource for each transmit antenna port. The multiplexing unit 1077 outputs the multiplexed signal to the radio transmitting unit 1079.

The radio transmitting unit 1079 performs Inverse Fast Fourier Transform (IFFT) on the signal resulting from the multiplexing, generates a baseband digital signal, converts the baseband digital signal into an analog signal, generates an in-phase component and an orthogonal component of an intermediate frequency from the analog signal, removes frequency components unnecessary for the intermediate frequency band, converts (up-converts) the signal of the intermediate frequency into a signal of a high frequency, removes unnecessary frequency components, performs power amplification, and outputs a final result to the transmit and/or receive antenna 109 for transmission.

An apparatus configuration of the base station apparatus 3 according to the present embodiment will be described below.

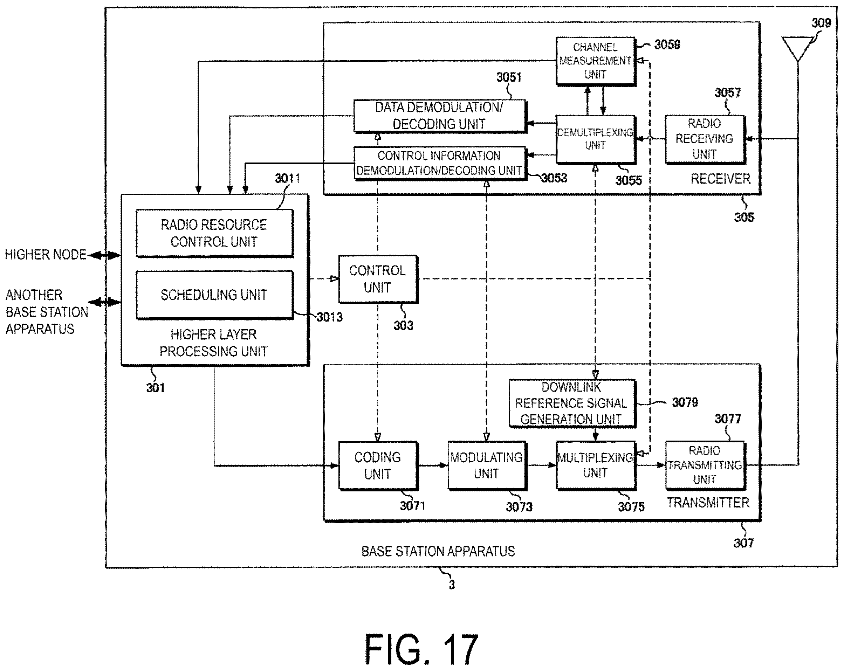

FIG. 17 is a schematic block diagram illustrating a configuration example of the base station apparatus 3 according to an aspect of the present embodiment. As is illustrated, the base station apparatus 3 is configured to include at least one of a higher layer processing unit 301, a control unit 303, a receiver 305, a transmitter 307, and a transmit and/or receive antenna 309. Additionally, the higher layer processing unit 301 is configured to include at least one of a radio resource control unit 3011 and a scheduling unit 3013. Additionally, the receiver 305 is configured to include at least one of a data demodulation/decoding unit 3051, a control information demodulation/decoding unit 3053, a demultiplexing unit 3055, a radio receiving unit 3057, and a channel measurement unit 3059. Additionally, the transmitter 307 is configured to include at least one of a coding unit 3071, a modulating unit 3073, a multiplexing unit 3075, a radio transmitting unit 3077, and a downlink reference signal generation unit 3079.

The higher layer processing unit 301 performs processing of the Medium Access Control (MAC) layer, the Packet Data Convergence Protocol (PDCP) layer, the Radio Link Control (RLC) layer, and the Radio Resource Control (RRC) layer. Furthermore, the higher layer processing unit 301 generates control information for control of the receiver 305 and the transmitter 307, and outputs the generated control information to the control unit 303. Note that part of the processing of the medium access control layer may be performed in the control unit 303.

The radio resource control unit 3011 included in the higher layer processing unit 301 can generate, or acquire from a higher node, the downlink data mapped to the downlink shared channel, the RRC signaling, and a MAC Control Element (MAC CE), and output the result of the generation or the acquirement to the scheduling unit 3013 or the control unit 303. Furthermore, the radio resource control unit 3011 manages various configuration information for each of the terminal apparatuses 1.

The scheduling unit 3013 included in the higher layer processing unit 301 manages radio resources of the shared channel and the control channel allocated to the terminal apparatus 1. In a case that the radio resource of the shared channel is allocated to the terminal apparatus 1, the scheduling unit 3013 generates the uplink grant indicating the allocation of the radio resource of the shared channel, and outputs the generated uplink grant to the transmitter 307.

Based on the control information originating from the higher layer processing unit 301, the control unit 303 generates a control signal for controlling the receiver 305 and the transmitter 307. The control unit 303 outputs the generated control signal to the receiver 305 and the transmitter 307 to control the receiver 305 and the transmitter 307.

The control unit 303 may include a function of performing part of the processing of the medium access control layer (e.g., a retransmission indication, or the like).

In accordance with the control signal input from the control unit 303, the receiver 305 demultiplexes, demodulates, and decodes the reception signal received from the terminal apparatus 1 through the transmit and/or receive antenna 309, and outputs information resulting from the decoding to the higher layer processing unit 301.

The radio receiving unit 3057 performs orthogonal demodulation on the uplink signal received through the transmit and/or receive antenna 309, and converts the orthogonally-demodulated analog signal to a digital signal. The radio receiving unit 3057 performs Fast Fourier Transform (FFT) on the digital signal, extracts a signal in the frequency domain, and outputs the resulting signal to the demultiplexing unit 3055.

The demultiplexing unit 3055 demultiplexes the signal input from the radio receiving unit 3057 into signals such as the control channel, the shared channel, and the reference signal. The demultiplexing may be performed based on radio resource allocation information that is determined in advance by the base station apparatus 3 using the radio resource control unit 3011 and that is included in the uplink grant each of which is notified to the terminal apparatuses 1. The demultiplexing unit 3055 makes a compensation of channels including the control channel and the shared channel from a channel estimate input from the channel measurement unit 3059. Furthermore, the demultiplexing unit 3055 outputs the reference signal resulting from the demultiplexing, to the channel measurement unit 3059.

The demultiplexing unit 3055 acquires a modulation symbol including the uplink data and a modulation symbol including the uplink control information from the demultiplexed control channel and shared channel. The demultiplexing unit 3055 outputs the modulation symbol including the uplink data acquired from the signal of the shared channel to the data demodulation/decoding unit 3051. The demultiplexing unit 3055 outputs the modulation symbol including the uplink control information acquired from the control channel or the shared channel to the control information demodulation/decoding unit 3053.

The channel measurement unit 3059 measures the channel estimate, the channel quality, and the like, based on the uplink reference signal input from the demultiplexing unit 3055, and outputs a result of the measurement to the demultiplexing unit 3055 and the higher layer processing unit 301.

The data demodulation/decoding unit 3051 decodes the uplink data from the modulation symbol of the uplink data input from the demultiplexing unit 3055. The data demodulation/decoding unit 3051 outputs the decoded uplink data to the higher layer processing unit 301.

The control information demodulation/decoding unit 3053 decodes HARQ-ACK from the modulation symbol including the uplink control information input from the demultiplexing unit 3055. The control information demodulation/decoding unit 3053 can output the decoded uplink control information to the higher layer processing unit 301 or the control unit 303.

The transmitter 307 generates the downlink reference signal in accordance with the control signal input from the control unit 303, codes and modulates the downlink control information and the downlink data input from the higher layer processing unit 301, multiplexes some or all of the control channel, the control resource set, the shared channel, and the reference signal, and transmits the signal to the terminal apparatus 1 through the transmit and/or receive antenna 309.

The coding unit 3071 performs coding on the downlink control information and the downlink data input from the higher layer processing unit 301. The modulating unit 3073 modulates the coded bits input from the coding unit 3071, in compliance with the modulation scheme such as BPSK, QPSK, 16 QAM, or 64 QAM. The modulating unit 3073 may apply transmission precoding to the modulation symbol. The transmission precoding may include transmission pre-code. Note that the transmission precoding may be multiplication (application) of the transmission precoder. The transmission pre-code may mean that the DFT (or DFT diffusion may be used) is performed.

The downlink reference signal generation unit 3079 generates the downlink reference signal. The multiplexing unit 3075 multiplexes the modulation symbol of each channel and the downlink reference signal to generate the transmission symbol.

The multiplexing unit 3075 may apply a precoder to the transmission symbol. The precoder applied to the transmission symbol by the multiplexing unit 3075 may be applied to the downlink reference signal and/or the modulation symbol. Additionally, the precoder applied to the downlink reference signal and the precoder applied to the modulation symbol may be the same or different.

The precoder is one method of forming a beam. The precoder is an operator (vector) that provides, for each transmit antenna, a phase rotation applied to the transmission symbol transmitted from one or a plurality of transmit antennas. In a Spatial Division Multiplex (SDM) in which a plurality of transmission symbols is multiplexed at the same time/frequency, since at least one vector is given for the plurality of transmission symbols, the precoder may be expressed by a matrix.

The terminal apparatus 1 that receives the transmission symbol to which the precoder is applied needs to know the precoder to be applied to the transmission symbol. That is, it is preferable for the base station apparatus 3 to notify the terminal apparatus 1 of information on the precoder (precoder information) to the terminal apparatus 1. A method of notification of the precoder includes at least a first notification method and a second notification method.

The first method of notification of the precoder is a method in which a quantized precoder is associated with an index for the precoder and notification of the index for the precoder is performed. For example, in a case that the control channel is subjected to the distributed mapping, the notification method of the precoder may be the first method. Also, in the first method, the precoders of the first control channel and the first reference signal may not correspond.

The second method of notification of the precoder is a method in which the precoder applied to the transmission symbol is applied to a reference signal corresponding to a channel in which the transmission symbol is included. The terminal apparatus 1 can perform suitable demodulation by using the reference signal for demodulation of the transmission symbol. For example, in a case that the control channel is subjected to the localized mapping, the notification method of the precoder may be the second method.

In a case that precoders applied to the first reference signal and the second reference signal are the same, the terminal apparatus 1 can improve accuracy for channel estimation using the first reference signal and the second reference signal. That is, it is preferable for the terminal apparatus 1 to know whether or not the precoders applied to the first reference signal and the second reference signal are the same.

The radio transmitting unit 3077 generates a time symbol by performing Inverse Fast Fourier Transform (IFFT) on the multiplexed transmission symbol and the like. The radio transmitting unit 3077 performs the modulation in compliance with an OFDM scheme on the time symbol, generates a digital signal in a baseband, converts the digital signal in the baseband into an analog signal, generates an in-phase component and an orthogonal component of an intermediate frequency from the analog signal, removes frequency components unnecessary for the intermediate frequency band, converts (up-converts) the signal of the intermediate frequency into a signal of a high frequency, removes unnecessary frequency components, and generates a Carrier signal (Carrier, RF signal, or the like). The radio transmitting unit 3077 performs power amplification on the carrier signal, and outputs the final result to the transmit and/or receive antenna 309 for transmission.

Aspects of various apparatuses according to an aspect of the present embodiment will be described below.
(1) To accomplish the object described above, aspects of the present invention are contrived to provide the following measures. That is, a first aspect of the present invention is a terminal apparatus 1, the terminal apparatus 1 including: a receiver 105 configured to receive at least a first channel and a second channel in a channel set; a demodulation unit 1053 configured to demodulate the first channel and the second channel, in which a first mapping or a second mapping is configured to the first channel and the second channel included in the channel set, the first channel corresponds to a first reference signal, the first reference signal and the second channel include identical physical characteristic for the first mapping, and the first reference signal and the second channel include different physical characteristics for the second mapping.
(2) Furthermore, in the first aspect of the present invention, for the first mapping, in a case that a first resource for the first channel and a second resource for the second channel overlap with each other, the first reference signal and the second channel may include identical physical characteristic, and in a case that the first resource and the second resource do not overlap with each other, the first reference signal and the second channel may include different physical characteristics.
(3) Furthermore, in the first aspect of the present invention, whether mapping of the first channel and the second channel is the first mapping or the second mapping may be given at least based on higher layer signaling.
(4) Furthermore, in the first aspect of the present invention, whether the mapping of the first channel and the second channel is the first mapping or the second mapping may be given at least based on the channel set, in a case that the channel set includes a third channel used for an initial connection, the mapping of the first channel and the second channel may be the first mapping, and in a case that the channel set does not include the third channel, the mapping of the first channel and the second channel may be the second mapping.
(5) Furthermore, in the first aspect of the present invention, the physical characteristic may include some or all of a precoder, a beam, a reception strength (or transmission strength), and a radio wave angle of arrival.
(6) Furthermore, a second aspect of the present invention is a terminal apparatus 1, the terminal apparatus 1 including: a receiver 105 configured to receive higher layer signaling; and a decoding unit configured to attempt to decode a first channel, in which in a time domain, Granularity of a physical characteristic of the first channel is assumed to be X symbols, and a value of the X is given by the higher layer signaling.
(7) Furthermore, a third aspect of the present invention is a base station apparatus 3, the base station apparatus 3 including: a configuration unit configured to configure mapping of a first channel and a second channel; and a transmitter 307 configured to transmit a channel set including the first channel and the second channel, in which a first mapping or a second mapping is configured to the first channel and the second channel, the first channel corresponds to a first reference signal, the first reference signal and the second channel include identical physical characteristics for the first mapping, and the first reference signal and the second channel include different physical characteristics for the second mapping.
(8) Furthermore, in the third aspect of the present invention, for the first mapping, in a case that a first resource for the first channel and a second resource for the second channel overlap with each other, the first reference signal and the second channel may include identical physical characteristics, and in a case that the first resource and the second resource do not overlap with each other, the first reference signal and the second channel may include different physical characteristics.
(9) Furthermore, in the third aspect of the present invention, information indicating whether mapping of the first channel and the second channel is the first mapping or the second mapping may be included in higher layer signaling.
(10) Furthermore, in the third aspect of the present invention, whether the mapping of the first channel and the second channel is the first mapping or the second mapping may be configured at least based on the channel set, in a case that the channel set includes a third channel used for an initial connection, the mapping of the first channel and the second channel may be configured to the first mapping, and in a case that the channel set does not include the third channel, the mapping of the first channel and the second channel may be configured to the second mapping.
(11) Furthermore, in the third aspect of the present invention, the physical characteristic may include some or all of a precoder, a beam, a reception strength (or transmission strength), and a radio wave angle of arrival.
(12) Furthermore, a fourth aspect of the present invention is a base station apparatus 3, the base station apparatus 3 including: a transmitter 307 configured to transmit higher layer signaling, in which the transmitter 307 transmits a first channel, in a time domain, Granularity of a physical characteristic of the first channel is configured to X symbols, and a value of the X is included in the higher layer signaling.

Each of programs running on a base station apparatus 3 and a terminal apparatus 1 according to an aspect of the present invention may be a program that controls a Central Processing Unit (CPU) and the like, such that the program causes a computer to operate in such a manner as to realize the functions of the above-described embodiment according to an aspect of the present invention. The information handled in these devices is temporarily stored in a Random Access Memory (RAM) while being processed. Thereafter, the information is stored in various types of Read Only Memory (ROM) such as a flash ROM and a Hard Disk Drive (HDD), and when necessary, is read by the CPU to be modified or rewritten.

Note that the terminal apparatus 1 and the base station apparatus 3 according to the above-described embodiment may be partially achieved by a computer. In that case, this configuration may be realized by recording a program for realizing such control functions on a computer-readable recording medium and causing a computer system to read the program recorded on the recording medium for execution.

Note that it is assumed that the "computer system" mentioned here refers to a computer system built into the terminal apparatus 1 or the base station apparatus 3, and the computer system includes an OS and hardware components such as a peripheral apparatus. Furthermore, the "computer-readable recording medium" refers to a portable medium such as a flexible disk, a magneto-optical disk, a ROM, a CD-ROM, and the like, and a storage apparatus such as a hard disk built into the computer system.

Moreover, the "computer-readable recording medium" may include a medium that dynamically retains a program for a short period of time, such as a communication line that is used to transmit the program over a network such as the Internet or over a communication line such as a telephone line, and may also include a medium that retains a program for a fixed period of time, such as a volatile memory within the computer system for functioning as a server or a client in such a case. Furthermore, the program may be configured to realize some of the functions described above, and also may be configured to be capable of realizing the functions described above in combination with a program already recorded in the computer system.

Furthermore, the base station apparatus 3 according to the above-described embodiment may be achieved as an aggregation (an apparatus group) including multiple apparatuses. Each of the apparatuses constituting such an apparatus group may include a portion or all of each function or each functional block of the base station apparatus 3 according to the above-described embodiment. The apparatus group may include each general function or each functional block of the base station apparatus 3. Furthermore, the terminal apparatus 1 according to the above-described embodiment can also communicate with the base station apparatus as the aggregation.

Furthermore, the base station apparatus 3 according to the above-described embodiment may serve as an Evolved Universal Terrestrial Radio Access Network (EUTRAN). Furthermore, the base station apparatus 3 according to the above-described embodiment may have some or all portions of the functions of a node higher than an eNodeB.

Furthermore, some or all portions of each of the terminal apparatus 1 and the base station apparatus 3 according to the above-described embodiment may be typically achieved as an LSI which is an integrated circuit or may be achieved as a chip set. The functional blocks of each of the terminal apparatus 1 and the base station apparatus 3 may be individually achieved as a chip, or some or all of the functional blocks may be integrated into a chip. Furthermore, a circuit integration technique is not limited to the LSI, and may be realized with a dedicated circuit or a general-purpose processor. Furthermore, in a case where with advances in semiconductor technology, a circuit integration technology with which an LSI is replaced appears, it is also possible to use an integrated circuit based on the technology.

Furthermore, according to the above-described embodiment, the terminal apparatus has been described as an example of a communication apparatus, but the present invention is not limited to such a terminal apparatus, and is applicable to a terminal apparatus or a communication apparatus of a fixed-type or a stationary-type electronic apparatus installed indoors or outdoors, for example, such as an Audio-Video (AV) apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications can be made to the aspect of the present invention within the scope of the present invention defined by claims, and embodiments that are made by suitably combining technical means disclosed according to the different embodiments are also included in the technical scope of the present invention. Furthermore, a configuration in which constituent elements, described in the respective embodiments and having mutually the same effects, are substituted for one another is also included in the technical scope of the present invention.

### Industrial Applicability

An aspect of the present invention can be utilized, for example, in a communication system, communication equipment (for example, a cellular phone apparatus, a base station apparatus, a radio LAN apparatus, or a sensor device), an integrated circuit (for example, a communication chip), or a program.

### Reference Signs List

1 (1A, 1B, 1C) Terminal apparatus
3 Base station apparatus
101, 301 Higher layer processing unit
103, 303 Control unit
105, 305 Receiver
107, 307 Transmitter
109, 309 Transmit and/or receive antenna
1011, 3011 Radio resource control unit
1013, 3013 Scheduling unit
1051 Decoding unit
1053 Demodulation unit
1055, 3055 Demultiplexing unit
1057, 3057 Radio receiving unit
1059, 3059 Channel measurement unit
1071, 3071 Coding unit
1073 Shared channel generation unit
1075 Control channel generation unit
1077, 3075 Multiplexing unit
1079, 3077 Radio transmitting unit
10711 Uplink reference signal generation unit
3051 Data demodulation/decoding unit
3053 Control information demodulation/decoding unit
3073 Modulating unit
3079 Downlink reference signal generation unit
9001, 9002, 9003, 9004, 9005, 9101, 9102, 9103, 9104, 9105, 9106, 9107, 9108 Control channel

## Claims

1. A terminal apparatus comprising:
a receiver configured to receive higher layer signaling; and
a decoding unit configured to attempt to decode a PDCCH in a control resource set,
wherein in a time domain, granularity of a physical characteristic of the PDCCH is considered to be X symbols,
a value of the X is given by the higher layer signaling, and
the higher layer signaling includes information for indicating the number of OFDM symbols of the control resource set.

2. The terminal apparatus according to claim 1,
wherein whether the PDCCH is distributedly mapped or continuously mapped is configured for each of the control resource sets.

3. A base station apparatus comprising:
a transmitter configured to transmit a PDCCH in a control resource set,
wherein granularity of a physical characteristic of the PDCCH is X symbols,
a value of the X is included in higher layer signaling, and
the higher layer signaling includes information for indicating the number of OFDM symbols of the control resource set.

4. The base station apparatus according to claim 3,
wherein whether the PDCCH is distributedly mapped or continuously mapped is configured for each of the control resource sets.

5. A communication method used for a terminal apparatus, the communication method comprising the steps of:
receiving higher layer signaling; and
attempting to decode a PDCCH in a control resource set,
wherein in a time domain, granularity of a physical characteristic of the PDCCH is considered to be X symbols,
a value of the X is given by the higher layer signaling, and
the higher layer signaling includes information for indicating the number of OFDM symbols of the control resource set.

6. A communication method used for a base station apparatus, the communication method comprising:
a transmitter configured to transmit a PDCCH in a control resource set,
wherein granularity of a physical characteristic of the PDCCH is X symbols,
a value of the X is included in higher layer signaling, and
the higher layer signaling includes information for indicating the number of OFDM symbols of the control resource set.
